# EUROPÄISCHE PATENTSCHRIFT

(11) **EP 0 894 780 B1**
(45) Veröffentlichungstag und Bekanntmachung des Hinweises auf die Patenterteilung: **26.11.2003**
(21) Anmeldenummer: 98114086.6
(22) Anmeldetag: 28.07.1998
(51) Int. Cl.: C04B 41/63

(54) **Verwendung von strahlungshärtbaren Zubereitungen für die Beschichtung von mineralischen Formkörpern**
Use of radiation-curable compositions for coating mineral bodies
Utilisation de compositions durcissables par rayonnement pour le revêtement de corps minéraux

(30) Priorität: 29.07.1997 DE 19732621
(43) Veröffentlichungstag der Anmeldung: 03.02.1999
(73) Patentinhaber: BASF AKTIENGESELLSCHAFT, 67056 Ludwigshafen (DE)
(72) Erfinder: Schwartz, Manfred, 67227 Frankenthal (DE); Menzel, Klaus, 71696 Möglingen (DE); Bechert, Bertold, 67269 Grünstadt (DE); Beck, Erich, 68526 Ladenburg (DE); Reich, Wolfgang, 67133 Maxdorf (DE)
(74) Vertreter: Kinzebach, Werner, Dr.

(56) Entgegenhaltungen:
- EP-A- 0 021 500
- DE-A- 19 514 266
- DATABASE WPI Section Ch, Week 8638 Derwent Publications Ltd., London, GB; Class A82, AN 86-249606 XP002081669 & JP 61 178484 A (WASHI NAKAGOSHI BOA) , 11. August 1986
- DATABASE WPI Section Ch, Week 8503 Derwent Publications Ltd., London, GB; Class A93, AN 85-016212 XP002081670 & JP 59 213682 A (DAINIPPON PRINTING CO LTD), 3. Dezember 1984
- DATABASE WPI Section Ch, Week 7935 Derwent Publications Ltd., London, GB; Class A32, AN 79-63773B XP002081671 & JP 54 090330 A (KANSAI PAINT CO LTD) , 18. Juli 1979

## Beschreibung

Die vorliegende Erfindung betrifft ein Verfahren zur Herstellung beschichteter mineralischer Form Körper.

Unter mineralischen Substraten sind hier und im Folgenden insbesondere Formkörper zu verstehen, die ein mineralisches Bindemittel aufweisen. Konkret wird hierunter ein Formkörper verstanden, der aus einem Gemisch (einem Mörtel) aus einem mineralischen Bindemittel, Wasser, Zuschlägen sowie gegebenenfalls Hilfsmitteln nach Formgebung dadurch entsteht, dass das mineralische Bindemittel-Wasser-Gemisch als Funktion der Zeit, gegebenenfalls unter Einwirkung erhöhter Temperatur, erhärtet. Mineralische Bindemittel sind allgemein bekannt. Es handelt sich um feinteilige anorganische Stoffe wie Kalk, Gips, Ton und/oder Zement, die durch anrühren mit Wasser in ihre gebrauchsfertige Form überführt werden, wobei letztere beim sich selbst überlassen, an der Luft oder auch unter Wasser, gegebenenfalls unter Einwirkung erhöhter Temperatur, als Funktion der Zeit steinartig verfestigt.

Die Zuschläge bestehen in der Regel aus körnigem oder faserförmigem natürlichem oder künstlichem Gestein (Kies, Sand, Mineralfasern), in Sonderfällen auch aus Metallen oder organischen Zuschlägen oder aus Gemischen der genannten Zuschläge, mit Korngrößen oder Faserlängen die dem jeweiligen Verwendungszweck in an sich bekannter Weise angefaßt sind. Häufig werden zum Zweck der Farbgebung auch Buntpigmente als Zuschläge mitverwendet.

Als Hilfsmittel kommen insbesondere solche Substanzen in Betracht, die das Erhärten beschleunigen oder verzögern oder die die Elastizität oder Porosität des verfestigten mineralischen Formkörpers beeinflussen. Hierbei handelt es sich insbesondere um Polymerisate, wie sie z.B. aus der US-A 43 40 510, der GB-PS 15 05 558, der US-A 31 96 122, der US-A 30 43 790, der US-A 32 39 479, der DE-A 43 17 035, der DE-A 43 17 036, der JP-A 91/131 533 und anderen Schriften bekannt sind.

Beispiele für erfindungsgemäß zu beschichtende mineralische Formkörper sind z.B. Betonröhren, wie sie zum Transport von Abwasser angewendet werden (vgl. z.B. JP-A 55/44 273), Betondachsteine (vgl. z.B. DE-A 21 64 256 oder DE-A 39 01 073) oder Randsteine, Treppenstufen, Bodenplatten, Sockelplatten auf der Basis mineralischer Bindemittel sowie Faserzementplatten, d. h. flächige mineralische Formkörper, die mit anorganischen oder organischen Fasern, z.B. Polyester- oder Nylonfasern, gefüllt sind.

Nachteilig an mineralischen Formkörpern ist, daß unter dem Einfluß der Witterung (insbesondere der Einwirkung von Wasser) die kationischen Bestandteile wie Ca²⁺ im Lauf der Zeit herausgelöst werden, was ihre Festigkeit mindert. Eine weitere nachteilige Eigenschaft mineralischer Formkörper ist das Auftreten von Ausblüherscheinungen. Diese sind vermutlich darauf zurückzuführen, daß die mineralischen Bindemittel mehrwertige Kationen wie Ca²⁺ in alkalischer Umgebung enthalten. Durch Reaktion mit dem Kohlendioxid aus der Luft können sich so an der Oberfläche der mineralischen Formkörper in Wasser schwerlösliche unansehnliche weiße Kalkflekken ausbilden. Das Erscheinungsbild des Ausblühens kann sowohl bereits während des Erhärtens von frisch zubereiteten mineralischen Formkörpern als auch unter der Einwirkung der Witterung auf bereits erhärtete mineralische Formkörper auftreten.

Zur vermeidung der vorgenannten nachteiligen Eigenschaften werden die mineralischen Formkörper häufig mit einer Beschichtung versehen. Hierzu werden heute in der Regel wässrige Beschichtungssysteme eingesetzt, die als Bindemittel eine wässrige Polymerisatdispersion enthalten. Übliche Bindemittel umfassen Styrol/Acrylester-Copolymerisate, Homo- und Copolymerisate des Vinylacetats, Reinacrylate und ähnliche. Die als Bindemittel verwendeten Polymerisatdispersionen weisen in der Regel Emulgatoren zur Stabilisierung der Polymerisate in der Dispersion auf. Zudem weisen die Bindemittelpolymerisate in der Regel Carboxylgruppen auf, die eine verbesserte Pigmentbindekraft der Dispersionen bewirken sollen. Hieraus resultieren jedoch grundsätzlich Nachteile: Zum einen können die Emulgatoren durch Einwirkung von Feuchtigkeit aus der Beschichtung herausgelöst werden. Dies wiederum führt zu einer Herabsetzung der Elastizität der Beschichtung. Weiterhin beobachtet man bei klaren Polymerisatfilmen oftmals ein Weißanlaufen (Eintrübung). Die Anwesenheit von Säuregruppen wiederum hat den Nachteil, dass die Polymerisate quellen und somit die Festigkeit der Beschichtung herabgesetzt wird. Ferner können derartige Beschichtungssysteme oftmals ein Ausblühen nicht vollständig verhindern. Dies gilt insbesondere dann, wenn die Beschichtung auf einen frisch hergestellten, mineralischen Formkörper aufgebracht wurde. Derartige frisch hergestellte mineralische Formkörper weisen in der Regel noch beträchtliche Wassermengen auf (frisch hergestellte Betonsteine, auch als "Grünsteine" bezeichnet, weisen beispielsweise 5 bis 10 Gew.-% Wasser auf). Dieses Wasser bewirkt beim Abbinden in der Regel zusammen mit den Emulgatoren ein unerwünschtes Ausblühen. Zudem ist die Festigkeit derartiger Beschichtungen durch die Quellung des Polymerisats während des Abbindens des Betonsteins dramatisch herabgesetzt.

Der Schutz mineralischer Formkörper vor dem oben beschriebenen Ausblühen konnte durch Beschichtungsmassen auf der Basis von Styrol/Acrylat-Dispersionen beziehungsweise Reinacrylatdispersionen, wie sie in der EP-A 469 295 sowie in der WO 96/33143 beschrieben sind, verbessert werden. Die Beständigkeit derartiger Polymerisatfilme bei Feuchtigkeitseinwirkung lässt jedoch noch zu wünschen übrig.

Die EP-A 355 028 beschreibt ein Verfahren zur Verhinderung von Ausblüherscheinungen auf mineralischen Substraten, bei dem eine Beschichtung, die ein konventionelles Polymerisat als Bindemittel und ein aromatisches Keton als Photosensibilisator enthält, auf ein mineralisches Substrat aufgebracht wird. Hierbei kommt es zu einer oberflächlichen Vernetzung der Beschichtung. Diese Beschichtungen werden jedoch längerfristig durch Bewitterung abgebaut.

Der Einsatz von strahlungshärtbaren Zubereitungen, die Polymere mit ethylenisch ungesättigten Doppelbindungen enthalten, ist für die Beschichtung von Oberflächen grundsätzlich bekannt. Derartige Zubereitungen werden in der Regel auf das zu beschichtende Substrat aufgebracht und gegebenenfalls nach einem physikalischen Trocknungsschritt durch Einwirkung energiereicher Strahlung, beispielsweise durch Bestrahlung mit UV-Licht einer Wellenlänge im Bereich von 250 bis 400 nm oder durch Bestrahlung mit energiereichen Elektronen (Elektronenstrahlung; 100 bis 350 keV) ausgehärtet. Es ist bekannt, strahlungshärtbare Zubereitungen für die Beschichtung von Hölzern, Leder, Kunststoffen oder Papier einzusetzen. Gelegentlich finden sich auch Hinweise auf Anwendung zur Beschichtung von Metalloberflächen, beispielsweise im Karosseriebau (siehe Ullmann's Encyclopedia of Industrial Chemistry, 5th edition on CD-ROM, 1997, Paints and Coatings 3.7.4). Die Verwendung von strahlungshärtbaren Zubereitung für die Beschichtung von mineralischen Substraten ist nicht bekannt. Eine umfassende Darstellung strahlungshärtbarer Zubereitungen sowie ihrer Anwendungen findet sich beispielsweise in P.K.T. Oldring (Herausgeber), Chemistry and Technology of UV- and EB-Formulations for Coatings and Paints, Vol. II, SITA Technology, London, 1991.

Die JP-A-611 784 84 beschreibt die Beschichtung von Zementplatten mit einer strahlungshärtbaren Zubereitung, die Polyurethanacrylat, Polyacrylat oder Epoxidharz enthält, und einer zweiten UVhärtenden Beschichtung.

Die JP-A-540 90 330 beschreibt ein Verfahren zur Beschichtung von Dachbausteinen mit strahlungshärtbaren Beschichtungszusammensetzungen und anschließendes Aushärten der Beschichtung mit Elektronenstrahlung. Die Beschichtungszusammensetzung enthält eine Verbindung mit Aminogruppe und ein polymerisierbares, ungesättigtes Harz mit wenigstens einer polymerisierbaren, ungesättigten Doppelbindung und wenigstens einer Epoxygruppe im Molekül.

Die EP-A-0 021 500 beschreibt ein Verfahren zur Beschichtung mineralischer, organischer oder metallischer Substrate, bei dem man im ersten Schritt eine erste Zusammensetzung, die ein polyhydroxyliertes Polymer und ein Übergangsmetall enthält, auf das zu beschichtende Substrat aufbringt. Im zweiten Schritt wird ein polymerisierbares Material, das auf die erste Schicht gepfropft werden kann, auf die erste Schicht aufgetragen, und im dritten Schritt wird das polymerisierbare Material auf die erste Schicht durch Polymerisation auf derselben aufgepfropft.

Die JP-A-592 136 82 beschreibt ein Verfahren zum Dekorieren von anorganischem Material, wobei zunächst eine erste Schicht aus einem synthetischen Harz A auf ein anorganisches Material aufgebracht wird. Auf diese Schicht wird mittels eines Druckverfahrens oder durch Transkription ein Muster aufgebracht. Anschließend wird ein strahlungshärtbares Harz B aufgebracht, das durch Einwirkung ionisierender Strahlen ausgehärtet wird.

Der vorliegenden Erfindung lag somit die Aufgabe zugrunde, Beschichtungen für mineralische Formkörper bereitzustellen, die ein Ausblühen wirkungsvoll verhindern und zugleich auch bei Einwirkung von Feuchtigkeit ihre Festigkeit und ihr optisches Erscheinungsbild nicht nachteilig verändern.

Es wurde überraschenderweise gefunden, dass diese Aufgabe gelöst wird, wenn man auf den mineralischen Formkörper zunächst eine konventionelle Beschichtung aufbringt, anschließend eine strahlungshärtbare Beschichtung aufbringt und die aufgebrachte Zubereitung durch Bestrahlung mit UV- oder Elektronenstrahlung härtet.

Demgemäß betrifft die vorliegende Erfindung ein Verfahren zur Herstellung beschichteter Formkörper, die wenigstens ein mineralisches Bindemittel enthalten, dadurch gekennzeichnet, dass man
1) auf die Oberfläche des Förmkörpers zunächst wenigstens eine konventionelle Beschichtung aufbringt, die als Bindemittel ein durch radikalische wässrige Emulsionspolymerisation erhältliches Polymerisat P2 mit einer Glasübergangstemperatur unterhalb 50°C enthält, welches keine ethylenisch ungesättigten Doppelbindungen aufweist;
2) eine strahlungshärtbare Zubereitung, die wenigstens ein Polymer P1 enthält, welches ethylenisch ungesättigte Doppelbindungen aufweist, auf die so beschichtete Oberfläche des Formkörpers aufbringt, gegebenenfalls vorhandenes Lösungsmittel entfernt, und
3) die aufgebrachte Zubereitung durch Bestrahlung mit UV- oder Elektronenstrahlung härtet.

Als Polymere P1 für die erfindungsgemäßen strahlungshärtbaren Zubereitungen kommen grundsätzlich alle Polymere in Frage, die ethylenisch ungesättigte Doppelbindungen aufweisen, welche sich unter Einwirkung elektromagnetischer Strahlung, wie UV- oder Elektronenstrahlung, radikalisch polymerisieren lassen. Hierbei ist zu beachten, dass der Gehalt ethylenisch ungesättigter Doppelbindungen im Polymerisat ausreichend ist, um eine wirksame Vernetzung zu gewährleisten. In der Regel wird der Gehalt ethylenisch ungesättigter Doppelbindungen in P1 im Bereich von 0,01 bis 1,0 mol/100 g P1, vorzugsweise im Bereich von 0,05 bis 0,8 mol/100 g P1 und ganz besonders bevorzugt 0,1 bis 0,6 mol/100 g P1, liegen. Der Begriff Polymer umfasst hier und im folgenden Polymerisate, Polykondensate und Polyadditionsprodukte, chemisch modifizierte Polymere als auch Prepolymere, die durch Umsetzung von polyfunktionellen Verbindungen, welche wenigstens drei reaktive Gruppen aufweisen, mit monofunktionellen oder polyfunktionellen Verbindungen, die mit den polyfunktionellen Verbindungen unter Bindungsbildung reagieren können, erhältlich sind. Derartige Prepolymere weisen vorzugsweise ein zahlenmittleres Molekulargewicht Mn ≥ 800 g/mol auf.

Bevorzugt werden Zubereitungen verwendet, die ethylenisch ungesättigte Polymere P1 aufweisen, wobei die ethylenisch ungesättigten Doppelbindungen in P1 als Gruppe der allgemeinen Formel

- P-Z-X-CR¹=CHR²

vorliegen, worin
- X: eine Einfachbindung, CH₂ oder CO bedeutet,
- Z: für eine Einfachbindung, O oder NH steht,
- P: für einen zwei- oder höherwertigen organischen Rest mit 2 bis 10 Kohlenstoffatomen oder für eine Einfachbindung steht,
- R¹: für Wasserstoff oder Methyl steht, und
- R²: Wasserstoff, Methyl oder, wenn X für CO steht, auch Phenyl oder CO₂Y bedeuten kann, worin Y für H oder C₁-C₄-Alkyl steht.

P ist vorzugsweise ausgewählt unter einer Einfachbindung und linearem oder verzweigtem C₂-C₁₀-Alkylen, das gegebenenfalls auch durch zwei oder mehrere, nicht benachbarte Sauerstoffatome unterbrochen oder mit OH substituiert sein kann. Beispiele hierfür sind 1,2-Ethylen, 1,2-Propylen, 1,3-Propylen, 1,4-Butylen, 1,5-Pentylen, 3-Oxo-1,5-pentylen, 4-Oxo-1,7-heptylen, 3,6-Dioxo- 1,8-octylen.

P kann auch für 3-, 4- oder 5-wertige aliphatische Reste stehen, die sich z. B. von höherwertigen Alkoholen, wie Glycerin, Trimethylolethan, -propan, -butan, Pentaerythrit etc. ableiten. P kann sowohl direkt an das polymere Rückgrat gebunden sein. Vorzugsweise ist P an ein Heteroatom oder über eine funktionelle Gruppe des Polymers, z. B. eine Estergruppe, Harnstoffgruppe, Urethangruppe, Amidgruppe, mit dem Polymeren verbunden.

Besonders bevorzugt weist das Polymer Acryloxy-, Methacryloxy-, Acrylamido- und Methacrylamidogruppen auf. Diese können direkt oder über eine Gruppe P, insbesondere über Alkylengruppen, an das polymere Rückgrat gebunden sein.

Polymere P1 sind dem Fachmann grundsätzlich bekannt und beispielsweise in P.K.T. Oldring (siehe oben) ausführlich beschrieben. In der Regel handelt es sich dabei um ethylenisch ungesättigte Gruppen aufweisende Silicone, Polyurethane, Polyester, Polyether, Epoxidharze, Melaminharze und Copolymerisate auf der Basis von Methacrylsäureestern. Bevorzugt werden hierunter Polymere, die als ethylenische Doppelbindungen Acryloxy- und/oder Methacryloxy-Gruppen aufweisen. Derartige Polymere werden als Siliconacrylate, Polyurethanacrylate, acrylatmodifizierte Polyester bzw. Polyesteracrylate, Epoxidacrylate, Polyetheracrylate, Melaminacrylate sowie acrylatmodif izierte Copolymerisate auf der Basis von (Meth-)Acrylsäureestern bezeichnet. Ferner können auch ethylenisch ungesättigte Polyester als Polymere P1 eingesetzt werden.

Bei den ethylenisch ungesättigte Doppelbindungen aufweisenden Siliconen handelt es sich in der Regel um lineare oder cyclische Polydimethylsiloxane, die Allyl-, Methallyl-, Acryl- oder Methacrylgruppen aufweisen. Die ethylenisch ungesättigten Gruppen sind entweder direkt, über ein Sauerstoffatom oder über eine Alkylengruppe, die linear oder verzweigt ist und durch ein oder mehrere, nicht benachbarte Sauerstoffatome unterbrochen sein kann, mit den Siliciumatomen des Polydimethylsiloxangrundgerüstes verbunden. Die Herstellung derartiger ethylenisch ungesättigter Siloxane ist dem Fachmann grundsätzlich bekannt und beispielsweise in P.K.T. Oldring (siehe oben), S. 142 bis S. 150 beschrieben. Auf die dort gemachte Offenbarung wird hiermit im vollen Umfang Bezug genommen. Die Einführung von Acrylat- bzw. Methacrylatgruppen gelingt beispielsweise durch Veresterung von Si-OH-Gruppen in Polydimethylsiloxanen mit den entsprechenden Säurechloriden oder den Alkylestern dieser Säuren, beispielsweise den Ethylestern und Methylestern. Eine andere Methode besteht darin, die Propargylester ethylenisch ungesättigter Carbonsäuren mit Dimethylchlorsilan zu hydrosilylieren und die dabei erhältliche Chlorsilicium-organische Verbindung mit OH-Gruppen enthaltenden Polydimethylsiloxanen umzusetzen. Eine weitere Funktionalisierungsmethode geht von Polydimethylsiloxanen aus, die eine an einem Siliciumatom befindliche w - Chloralkylgruppe, beispielsweise eine 3-Chlorpropylgruppe oder eine 2-Methyl-3-chlorpropylgruppe an einem Siliciumatom aufweisen. Derartige Verbindungen lassen sich mit OH-Gruppen enthaltenden, ethylenisch ungesättigten Verbindungen in Gegenwart geeigneter Basen, beispielsweise tertiärer Amine, wie Triethylamin, zu ethylenisch ungesättigten Polysiloxanen modifizieren. Beispiele für OH-Gruppen enthaltende ethylenisch ungesättigte Verbindungen sind die Ester ethylenisch ungesättigter Carbonsäuren mit Polyhydroxyverbindungen, z. B. die Hydroxyalkylacrylate und -methacrylate, wie Hydroxyethyl(meth)acrylat, Hydroxypropyl(meth)acrylat, 3-Hydroxy-2,2-dimethylpropyl-(meth)acrylat, Trimethylolpropandi(meth)acrylat und Pentaerythritdi- bzw. -tri(meth)acrylat.

Die genannten ethylenisch ungesättigten Silicone sind dem Fachmann hinreichend bekannt und grundsätzlich kommerziell erhältlich. Wegen weiterer Details sei hiermit auf P.K.T. Oldring, S. 135 bis S. 152 und die dort zitierte Literatur verwiesen.

Als Polymere P1 geeignete ethylenisch ungesättigte Epoxidharzderivate umfassen insbesondere die Umsetzungsprodukte von Epoxygruppen enthaltenden Verbindungen oder Oligomeren mit ethylenisch ungesättigten Monocarbonsäuren, wie Acrylsäure, Methacrylsäure, Crotonsäure, Zimtsäure. Anstelle oder zusammen mit den Monocarbonsäuren können auch die Halbester ethylenisch ungesättigter Dicarbonsäuren mit Monoalkoholen, wie Methanol, Ethanol, n-Propanol, Isopropanol, n-Butanol, tert.-Butanol, n-Hexanol und 2-Ethylhexanol eingesetzt werden. Geeignete Epoxygruppen enthaltende Substrate umfassen insbesondere die Polyglycidylether mehrwertiger Alkohole. Hierzu zählen die Diglycidylether des Bisphenols A und seiner Derivate, ferner die Diglycidylether von Oligomeren des Bisphenols A, wie sie durch Umsetzung von Bisphenol A mit dem Diglycidylether des Bisphenols A erhältlich sind, weiterhin die Polyglycidylether von Novolacken. Die Umsetzungsprodukte der ethylenisch ungesättigten Carbonsäuren mit den vorliegenden Glycidylethern können mit primären oder sekundären Aminen modifiziert werden. Ferner können durch Umsetzung von OH-Gruppen in Epoxidharzen mit geeigneten Derivaten ethylenisch ungesättigter Carbonsäuren, z. B. den Säurechloriden, weitere ethylenisch ungesättigte Gruppen in das Epoxidharz eingeführt werden. Ethylenisch ungesättigte Epoxidharze sind dem Fachmann hinreichend bekannt und kommerziell erhältlich. Wegen weiterer Details wird auf P.K.T. Oldring, S. 37 bis S. 68 sowie die dort zitierte Literatur, verwiesen.

Beispiele für als Polymere P1 geeignete ethylenisch ungesättigte Melaminharze sind die Umsetzungsprodukte von Melamin/Formaldehyd-Kondensationsprodukten mit OH-Gruppen enthaltenden, ethylenisch ungesättigten Verbindungen, ethylenisch ungesättigten Dicarbonsäureanhydriden oder mit den Amiden ethylenisch ungesättigter Monocarbonsäuren. Geeignete Melamin/Formaldehyd-Kondensationsprodukte sind insbesondere Hexamethylolmelamin (HMM) und Hexamethoxymethylolmelamin (HMMM). Geeignete OH-Gruppen enthaltende Verbindungen umfassen beispielsweise die Hydroxyalkylester ethylenisch ungesättigter Carbonsäuren, insbesondere der Acrylsäure und der Methacrylsäure. Ferner kommen für die Umsetzung mit HMM ethylenisch ungesättigte Alkohole, wie Allylalkohol oder Crotylalkohol, oder ethylenisch ungesättigte Dicarbonsäureanhydride, wie Maleinsäureanhydrid, in Frage. Ferner können sowohl HMM als auch HMMM mit den Amiden ethylenisch ungesättigter Carbonsäuren, z. B. Acrylsäureamid oder Methacrylsäureamid, zu ethylenisch ungesättigten Melaminharzen modifiziert werden. Derartige Melaminharze sind dem Fachmann bekannt und beispielsweise in P.K.T. Oldring, S. 208 bis S. 214 sowie in der EP-A 464 466 und der DE-A 25 50 740 beschrieben, auf die wegen weiterer Details hiermit verwiesen wird.

Als ethylenisch ungesättigte Polymere P1 können ferner Polyester eingesetzt werden, die ethylenisch ungesättigte Doppelbindungen enthalten. Hierbei ist zu unterscheiden zwischen sog. ethylenisch ungesättigten Polyestern, die durch Copolykondensation von konventionellen Dicarbonsäuren zusammen mit ethylenisch ungesättigten Dicarbonsäuren bzw. deren Anhydriden und niedermolekularen Diolen erhältlich sind, und ethylenisch modifizierten Polyestern, die durch Derivatisierung freier OH-Gruppen in konventionellen Polyestern erhältlich sind. Die Derivatisierung der OH-Gruppen kann separat oder bei der Herstellung des OH-Gruppen-haltigen Poyesters erfolgen.

Ethylenisch ungesättigte Polyester umfassen insbesondere die Copolykondensate des Maleinsäureanhydrids mit wenigstens einer weiteren Dicarbonsäure bzw. deren Anhydrid, und einem niedermolekularen Diol. In diesem Fall sind die Dicarbonsäuren bzw. deren Anhydride vorzugsweise ausgewählt unter Bernsteinsäure, Bernsteinsäureanhydrid, Glutarsäure, Glutarsäureanhydrid, Adipinsäure, Phthalsäure, Terephthalsäure, Isophthalsäure und insbesondere Phthalsäureanhydrid. Geeignete Diole sind vorzugsweise ausgewählt unter Ethylenglykol, 1,2-Propylenglykol, 1,4-Butandiol, 1,5-Pentandiol, Neopentylglykol und 1,6-Hexandiol, insbesondere 1,2-Propylenglykol.

Geeignete Hydroxylgruppen enthaltende Polyester für die Modifizierung zu ethylenisch modifizierten Polyestern können in üblicher Weise durch Polykondensation von zwei- oder mehrwertigen Carbonsäuren mit zweiwertigen Alkoholen und/oder wenigstens einer weiteren mehrwertigen Alkoholkomponente hergestellt werden. Als zwei- oder mehrwertige Carbonsäure kommen in diesem Fall aliphatische und aromatische C₃-C₃₆-Carbonsäuren, deren Ester und Anhydride in Frage. Hierzu zählen Bernsteinsäure, Bernsteinsäureanhydrid, Glutarsäure, Glutarsäureanhydrid, Adipinsäure, Pimelinsäure, Korksäure, Acelainsäure, Sebacinsäure, Phthalsäure, Phthalsäureanhydrid, Isophthalsäure, Terephthalsäure, Tetrahydrophthalsäure, Tetrahydrophthalsäureanhydrid, Trimellithsäure, Trimellithsäureanhydrid, Pyromellithsäure und Pyromellithsäureanhydrid. Als zweiwertige Alkohole kommen z. B. Ethylenglykol, Propylenglykol, 1,4-Butandiol, 1,5-Pentandiol, Neopentylglykol, 1,6-Hexandiol, 2-Methyl-1,5-pentandiol, 2-Ethyl-1,4-butandiol, Dimethylolcyclohexan, Diethylenglykol, Triethylenglykol, deren Gemische sowie ferner Polyadditionspolymerisate cyclischer Ether, wie Polytetrahydrofuran, Polyethylenglykol und Polypropylenglykol in Frage. Als höherwertige Alkohole kommen insbesondere drei- bis sechswertige Alkohole, wie Glycerin, Trimethylolethan, Trimethylolpropan, Trimethylolbutan, Pentaerythrit, Ditrimethylolpropan, Sorbit, Erythrit und 1,3,5-Trihydroxybenzol in Frage. Sofern im Polykondensationsschritt die Gesamtmolzahl der OH-Gruppen in der Alkoholkomponente größer ist als die Gesamtmolzahl der Carboxylgruppen in der Säurekomponente, erhält man einen OH-Gruppen enthaltenden Polyester. Diese OH-Gruppen können in bekannter Weise mit den zuvor genannten ethylenisch ungesättigten Carbonsäuren, insbesondere mit Acrylsäure und Methacrylsäure, nach üblichen Verfahren verestert werden. Die Entfernung des bei der Veresterungsreaktion gebildeten Reaktionswassers kann dabei z. B. durch wasserentziehende Mittel, extraktiv oder durch azeotrope Destillation erfolgen. Die Veresterung erfolgt im Allgemeinen in Gegenwart eines Katalysators, z. B. einer starken Säure, wie Schwefelsäure, wasserfreiem Chlorwasserstoff, Toluolsulfonsäure und/oder sauren Ionenaustauschern. Ferner können die OH-Gruppen im Polyester mit reaktiven, ethylenisch ungesättigten Verbindungen verethert werden, z. B. mit Allylchlorid oder Methallylchlorid. Eine andere Ausführungsform betrifft Polyester aus Diolen, Dicarbonsäuren und wenigstens einer höherwertigen Carbonsäure. In diesem Fall werden die Hydroxylgruppen nachträglich in den Polyester durch Umsetzung der Carbonsäuregruppen mit Alkylenoxiden, wie Ethylenoxid oder Propylenoxid, eingeführt. Diese Alkoholfunktionen können dann in der oben beschriebenen Weise verethert oder verestert werden. Wegen weiterer Details sei auf P.K.T. Oldring, S. 123 bis S. 135, verwiesen. Die vorgenannten Produkte sind dem Fachmann hinreichend bekannt und kommerziell erhältlich. Ihr zahlenmittleres Molekulargewicht liegt in der Regel im Bereich von 500 bis 10 000 und vorzugsweise im Bereich von 800 bis 3 000.

Als ethylenisch modifizierte Polyester kommen auch Polyester in Frage, die durch Cokondensation konventioneller Di- oder Polycarbonsäuren mit konventionellen Alkoholkomponenten und ethylenisch ungesättigten Monocarbonsäuren, vorzugsweise Acrylsäure und/oder Methacrylsäure erhältlich sind. Derartige Polyester sind beispielsweise aus der EP-A 279 303 bekannt, auf die hiermit wegen weiterer Details verwiesen wird. Die Einführung der ethylenisch ungesättigten Gruppen in den Polyester findet hier bereits während des Aufbaus des Polyesters aus den niedermolekularen Komponenten statt.

Als Polymere P1 können auch ethylenisch ungesättigte Polyether eingesetzt werden. Ethylenisch ungesättigte Polyether sind aufgebaut aus einem Polyethergrundkörper, der an seinen Enden ethylenisch ungesättigte Gruppen aufweist. Der Polyethergrundkörper ist beispielsweise durch Umsetzung eines zwei- oder mehrwertigen Alkohols, beispielsweise eines Alkohols, der oben als Di- oder Polyolkomponente für die Herstellung von Polyestern genannt wurde, mit Epoxiden, vorzugsweise mit Ethylenoxid und/oder Propylenoxid erhältlich. Dieser Polyethergrundkörper enthält noch freie OH-Gruppen, die in der oben beschriebenen Weise in Allyl-, Methallyl-, Crotyl- oder Phenylallylgruppen überführt oder mit ethylenisch ungesättigten Carbonsäuren, insbesondere Acrylsäure und/ oder Methacrylsäure, oder geeigneten Derivaten wie Säurechloriden, C₁-C₄-Alkylestern oder Anhydriden verestert werden können.

Als Polymere P1 kommen ferner ethylenisch ungesättigte Gruppen aufweisende Copolymerisate auf der Basis von (Meth)acrylsäureestern in Frage. Derartige ethylenisch ungesättigte Polymere sind in der Regel durch polymeranaloge Umsetzungen von funktionalisierten Polymeren (Polymere FP) erhältlich, die freie Hydroxyl-, Carbonyl-, Carboxyl-, Isocyanat-, Amino- und/oder Epoxidgruppen aufweisen. Die Einführung der ethylenischen Doppelbindungen erfolgt in der Regel durch Umsetzung mit geeigneten, niedermolekularen, ethylenisch ungesättigten Verbindungen, die eine funktionelle Gruppe aufweisen, welche mit der reaktiven Gruppe im Polymer unter Ausbildung einer Bindung reagieren kann.

Die als Ausgangsmaterialien verwendeten funktionalisierten Polymere FP sind in der Regel durch radikalische Polymerisation wenigstens eines ethylenisch ungesättigten Monomers, das eine der vorgenannten funktionellen Gruppen aufweist, gegebenenfalls zusammen mit weiteren ethylenisch ungesättigten Comonomeren, erhältlich. In der Regel machen die ethylenisch ungesättigten Monomere mit funktioneller Gruppe 5 bis 50 Mol-%, vorzugsweise 15 bis 40 Mol-% und insbesondere 20 bis 35 Mol-%, der gesamten zu polymerisierenden Monomere aus. Beispiele für Monomere mit funktioneller Gruppe sind die Hydroxyalkylacrylate und -methacrylate, wie 2-Hydroxyethyl(meth)acrylat, Hydroxypropyl(meth)acrylat, 4-Hydroxybutyl(meth)acrylat, Aminoalkylacrylate und -methacrylate, wie 2-Aminoethyl(meth)acrylat, Carbonylverbindungen, wie Acrolein, Methacrolein, Vinylethylketon, N-Diacetonacrylamid und - methacrylamid, vinylisocyanat, Dimethyl-3-isopropenylbenzylisocyanat, 4-Isocyanatostyrol und Isocyanate ethylenisch ungesättigter Carbonsäuren, z. B. Methacryloylisocyanat, ω-Isocyanatoalkyl(meth)- acrylate, Glycidylverbindungen, wie Glycidylallyl- und Glycidylmethallylether, die Glycidylester ethylenisch ungesättigter Carbonsäuren, wie Glycidyl(meth)acrylat, ethylenisch ungesättigte Anhydride, wie Maleinsäureanhydrid und Methacrylsäureanhydrid, die Amide ethylenisch ungesättigter Carbonsäuren, wie Acrylamid und Methacrylamid. Geeignete Comonomere sind in der Regel ausgewählt unter den Estern der Acrylsäure und der Methacrylsäure und gegebenenfalls vinylaromatischen Verbindungen. Beispiele für geeignete Comonomere sind die C₁-C₄-Acrylsäure- und - methacrylsäureester, wie Methyl(meth)acrylat, Ethyl(meth)acrylat, n-Propyl(meth)acrylat, Isopropyl(meth)acrylat, n-Butyl-(meth)acrylat, Isobutyl(meth)acrylat und tert.-Butyl(meth)acrylat. Geeignete Comonomere sind ferner Styrol, 1-Methylstyrol, 4-tert.-Butylstyrol und 2-Chlorstyrol. In untergeordnetem Maße können auch Monomere, wie Vinylacetat, Vinylpropionat, Vinylchlorid, Vinylidenchlorid, konjugierte Diene, wie Butadien und Isopren, Vinylether von C₁-C₂₀-Alkanolen, z. B. Vinylisobutylether, Acrylnitril, Methacrylnitril und heterocyclische vinylverbindungen, wie 2-Vinylpyridin und N-Vinylpyrrolidon verwendet werden. Eine bevorzugte Ausführungsform umfasst als Comonomere wenigstens ein Monomer, ausgewählt unter den Estern der Methacrylsäure, insbesondere Methylmethacrylat, und wenigstens ein weiteres Comonomer, ausgewählt unter den Alkylestern der Acrylsäure und/oder Styrol.

Die für die polymeranaloge Umsetzung geeigneten ethylenisch ungesättigten Verbindungen mit funktioneller Gruppe sind vorzugsweise ausgewählt unter den oben genannten ethylenisch ungesättigten Monomeren mit funktioneller Gruppe. Voraussetzung ist, dass die Funktionalität der ethylenisch ungesättigten Verbindung mit den Funktionalitäten auf dem Polymer unter Bindungsbildung mit dem Polymer reagieren kann. Geeignete Reaktionstypen sind hierbei Kondensations- oder Additionsreaktionen. In Betracht kommen beispielsweise Funktionalitätenpaare, wie Isocyanat/Hydroxyl, Isocyanat/Amino, Anhydrid/Hydroxyl, Anhydrid/Amino, Carbonyl/Amino, Carbonsäurechlorid/Hydroxyl, Glycidyl/Hydroxyl, Glycidyl/Amino oder Amid und Glycidyl/Carboxyl. In einer bevorzugten Ausführungsform ist das ethylenisch ungesättigte Polymer erhältlich durch Umsetzung eines funktionalisierten Polymers, das Glycidylgruppen aufweist, mit ethylenisch ungesättigten Hydroxylgruppen aufweisenden Verbindungen, insbesondere mit Hydroxyalkylestern der obengenannten ethylenisch ungesättigten Carbonsäuren, z. B. 2-Hydroxyethylacrylat. Beispiele für derartige ethylenisch ungesättigte Polymere finden sich in der EP-A 650 979, auf deren Offenbarung hiermit in vollem Umfang Bezug genommen wird.

Weiterhin sind als Polymere P1 Polyurethanderivate, die ethylenisch ungesättigte Doppelbindungen enthalten, geeignet. Derartige Polyurethane sind beispielsweise durch Umsetzung Isocyanatgruppen enthaltender Polyurethane mit ethylenisch ungesättigten Verbindungen, die ihrerseits wenigstens eine gegenüber Isocyanat reaktive funktionelle Gruppe aufweisen, beispielsweise eine primäre oder sekundäre Aminogruppe oder eine Hydroxylgruppe, erhältlich. Beispiele für geeignete ethylenisch ungesättigte Verbindungen mit Amino- oder Hydroxylgruppe sind insbesondere die oben genannten Veresterungsprodukte ethylenisch ungesättigter Carbonsäuren mit Di- oder Polyolen, wobei mindestens eine OH-Gruppe unverestert bleibt, inbesondere die C₂-C₁₂-Hydroxyalkyl(meth)acrylate wie Hydroxyethyl(meth)acrylat, Hydroxypropyl(meth)acrylat, Butandiolmono(meth)acrylat, weiterhin partielle Veresterungsprodukte höherwertiger Alkohole mit Acryl- bzw. Methacrylsäure, z. B. Trimethylolpropanmono- und -di(meth)acrylat, Pentaerythritdi- und - tri(meth)acrylat sowie ferner entsprechende Aminoalkylester und Hydroxyalkylamide wie N-Hydroxyalkyl(meth)acrylamide und 3-Aminoalkyl(meth)acrylate.

Isocyanatgruppen enthaltende Polyurethane werden in bekannter Weise durch Umsetzung von aliphatischen und/oder aromatischen Dioder Polyisocyanaten als Komponente A mit Verbindungen, die OH-Gruppen aufweisen (Komponente B) erhalten. In untergeordnetem Maße können auch Polyamine und Aminoalkohole als Komponente B mitverwendet werden. Beim Einsatz von Aminen und/oder Aminoalkoholen resultieren Polyurethane, die Harnstoffgruppen aufweisen. Die Anzahl von Isocyanatgruppen im Polyurethan wird über das Molmengenverhältnis der Edukte in bekannter Weise gesteuert. Die ethylenisch ungesättigten Gruppen können in bekannter Weise durch polymeranaloge Umsetzung in das Isocyanatgruppen enthaltende Polyurethan nachträglich eingeführt werden. Auch ist es möglich, die ethylenisch ungesättigten Verbindungen mit gegenüber Isocyanatgruppen reaktiven Funktionalitäten als Komponente C bei der Herstellung der Polyurethane direkt einzusetzen.

Beispiele für die Di- oder Polyisocyanate der Komponente A sind geradkettige oder verzweigte C₄-C₁₄-Alkylendiisocyanate, cycloaliphatische Diisocyanate mit insgesamt 6 bis 12 C-Atomen, aromatische Diisocyanate mit insgesamt 8 bis 14 C-Atomen, Isocyanuratgruppen aufweisende Polyisocyanate, Uretdiondiisocyanate, Biuretgruppen aufweisende Polyisocyanate, Urethan- und/oder Allophanatgruppen aufweisende Polyisocyanate, Oxadiazintriongruppen enthaltende Polyisocyanate, Uretonimin-modifizierte Polyisocyanate oder deren Gemische.

Als Diisocyanate genannt seien z. B. Tetramethylendiisocyanat, Hexamethylendiisocyanat(1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat) oder 2,4- oder 2,6-Diisocyanato-1-methylcyclohexan oder aromatische Diisocyanate wie 2,4-Diisocyanatotoluol, 2,6-Diisocyanatotoluol, Tetramethylxylylendiisocyanat, 1,4-Diisocyanatobenzol, 4,4'- und 2,4-Diisocyanatodiphenylmethan, p-Xylylendiisocyanat sowie Isopropenyldimethyltoluylendiisocyanat.

Bei den Isocyanuratgruppen aufweisenden Polyisocyanaten handelt es sich insbesondere um einfache Tris-isocyanato-Isocyanurate, welche cyclische Trimere der Diisocyanate darstellen, oder um Gemische mit ihren höheren, mehr als einen Isocyanuratring aufweisenden Homologen.

Bei Uretdiondiisocyanaten handelt es sich bevorzugt um cyclische Dimerisierungsprodukte von Diisocyanaten. Die Uretdiondiisocyanate können z. B. als alleinige Komponente oder im Gemisch mit anderen Polyisocyanaten, insbesondere den Isocyanuratgruppen enthaltenden Polyisocyanaten, eingesetzt werden. Geeignete Biuretgruppen aufweisende Polyisocyanate weisen vorzugsweise einen NCO-Gehalt von 18 bis 22 Gew.-% und eine mittlere NCO-Funktionalität von 3 bis 4,5 auf.

Urethan- und/oder Allophanatgruppen aufweisende Polyisocyanate können beispielsweise durch Umsetzung von überschüssigen Mengen an Diisocyanaten mit einfachen, mehrwertigen Alkoholen, wie z. B. Trimethylolpropan, Glycerin, 1,2-Dihydroxypropan oder deren Gemischen erhalten werden. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.

Oxadiazintriongruppen enthaltende Polyisocyanate sind aus Diisocyanat und Kohlendioxid herstellbar.

Geeignete OH-Gruppen enthaltende Verbindungen der Komponente B sind die im Zusammenhang mit der Herstellung von Polyestern genannten niedermolekularen Diole und Polyole sowie Polyesterpolyole, insbesondere Polyesterdiole. Beispiele für Polyesterpolyole sind Umsetzungsprodukte aus den oben genannten, zwei- oder mehrwertigen, vorzugsweise zweiwertigen Carbonsäuren mit mehrwertigen, vorzugsweise zweiwertigen und gegebenfalls zusätzlich dreiwertigen Alkoholen. Beispiele für geeignete Ausgangskomponenten sind die oben genannten mehrwertigen Carbonsäuren und Alkohole. Als Polyesterdiole können auch Oligomere von Lactonen, wie β-Propiolacton, γ-Butylrolacton, ε-Caprolacton eingesetzt werden, die durch Oligomerisierung der Lactone in Gegenwart von Startern auf der Basis der obengenannten, niedermolekularen Diole erhältlich sind. Die vorgenannten Polyesterdi- oder -polyole weisen in der Regel zahlenmittlere Molekulargewichte im Bereich von 500 bis 5 000, vorzugsweise 750 bis 3 000 auf.

In einer bevorzugten Ausführungsform der vorliegenden Erfindung enthält die strahlungshärtbare Zubereitung wenigstens ein ethylenisch ungesättigte Doppelbindungen aufweisendes Polyurethan PU1, das in Wasser dispergierbar ist. Derartige Polyurethane PU1 sind in der Regel Umsetzungsprodukte aus
(1) wenigstens einem organischen Di- oder Polyisocyanat,
(2) wenigstens einem Polyesterdi- oder -polyol,
(3) gegebenenfalls einem oder mehreren, von (2) verschiedenen Dioder Polyolen,
(4) wenigstens einer Verbindung mit mindestens einer gegenüber Isocyanat reaktiven funktionellen Gruppe und mindestens einer Carboxylgruppe oder Carboxylatgruppe,
(5) Verbindungen mit mindestens einer gegenüber Isocyanat reaktiven Gruppe und mindestens einer copolymerisierbaren, ethylenisch ungesättigten Gruppe,
(6) gegebenenfalls von 1) bis 5) verschiedenen Verbindungen mit mindestens einer gegenüber Isocyanat reaktiven Gruppe.

Als Di- oder Polyisocyanate (1) kommen alle als Romponente A bezeichneten Di- oder Polyisocyanate in Betracht. Bei den Polyesterpolyolen (2) handelt es sich insbesondere um Polyesterdiole, wie sie oben als Komponente B beschrieben sind.

Bei den weiteren Di- oder Polyolen (3) handelt es sich um niedermolekulare Diole oder auch Triole, insbesondere mit einem Molekulargewicht unter 500 g/mol, welche als Kettenverlängerer oder Vernetzer Verwendung finden. Beispiele hierfür sind die oben genannten Di- oder Polyole.

Als weitere Aufbaukomponente (4) werden Verbindungen eingesetzt, die mindestens eine, vorzugsweise eine oder zwei gegenüber Isocyanatgruppen reaktionsfähige Gruppen, also Hydroxyl-, primäre oder sekundäre Aminogruppen, und mindestens eine Carboxyl- oder Carboxylatgruppe enthalten. Genannt seien z. B. Hydroxycarbonsäuren, z. B. Dihydroxycarbonsäuren, wie Dimethylolpropionsäure, sulfonsäurehaltige Carbonsäuren, z. B. 5-Sulfoisophthalsäure, Aminosulfonsäuren, oder Aminocarbonsäuren. Bevorzugt sind Aminocarbonsäuren, besonders bevorzugt Diaminocarbonsäuren. Ganz besonders bevorzugt sind Addukte von Acrylsäure an C₂-C₆-, vorzugsweise C₂-Alkylendiamine im Molverhältnis Alkylendiamin:Acrylsäure von vorzugsweise ca. 1:1 (PUD-Salz). Durch die Aufbaukomponente (4) werden die Polyurethane selbst dispergierbar, d. h. beim Dispergieren in Wasser werden keine Dispergierhilfsmittel, wie Schutzkolloide oder Emulgatoren, benötigt.

Carboxylgruppen werden vor oder bei der Dispergierung in Wasser z. B. durch anorganische und/oder organische Basen, wie Alkalihydroxyde, -carbonate, -hydrogencarbonate, Ammoniak oder primäre, sekundäre oder vorzugsweise tertiäre Amine wie Triethylamin neutralisiert.

Als Aufbaukomponente (5), welche mindestens eine copolymerisierbare, ethylenisch ungesättigte Gruppe, und mindestens eine, vorzugsweise eine gegenüber Isocyanat reaktive Gruppe aufweisen, kommen z. B. Ester von Acryl- oder Methacrylsäure mit Polyolen in Betracht, wobei mindestens eine Hydroxylgruppe unverestert bleibt. Besonders bevorzugt sind C₁-C₁₂-Hydroxylalkyl(meth)acrylate.

Bei den gegebenenfalls einzusetzenden Aufbaukomponenten (6) handelt es sich z. B. um mindestens difunktionelle Amin-Kettenverlängerer bzw. -vernetzer, vorzugsweise des Molekulargewichtsbereiches von 32 bis 500 g/mol, welche mindestens zwei primäre, zwei sekundäre oder eine primäre und eine sekundäre Aminogruppe enthalten.

Beispiel hierfür sind Diamine, wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine, wie Diethylentriamin oder 1,8-Diamino-4-aminomethyloctan.

Die Anteile der einzelnen Aufbaukomponenten (1) bis (6) werden geeigneterweise im Grammäquivalent der gegenüber Isocyanat reaktiven Gruppen in den Komponenten (2) bis (6), bezogen auf 1 Äquivalent Isocyanatgruppen in (1) angegeben, und betragen:
- für (2) vorzugsweise 0,1 bis 0,8, insbesondere 0,2 bis 0,7 Grammäquivalent Hydroxylgruppen,
- für (3) vorzugsweise 0 bis 0,8 und besonders bevorzugt 0 bis 0,7 Grammäquivalent Hydroxylgruppen,
- für (6) vorzugsweise 0 bis 0,4 und insbesondere 0 bis 0,2 Grammäquivalent von mit Isocyanat reaktiven Gruppen.

Komponente (4) wird bevorzugt in solchen Mengen eingesetzt, dass das Polyurethan PU1 einen Gehalt von 0,005 bis 0,2, insbesondere 0,001 bis 0,1 und besonders bevorzugt 0,01 bis 0,05 mol Carboxyl- bzw. Carboxylatgruppen pro 100 g Polyurethan PU1 aufweist. Die verbindungen (5) werden vorzugsweise in solchen Mengen eingesetzt, dass der Gehalt an Doppelbindungen im Polyurethan im Bereich von 0,1 bis 0,3 und besonders bevorzugt im Bereich von 0,15 bis 0,25 mol/100 g Polyurethan PU1 liegt.

Das zahlenmittlere Molekulargewicht der erfindungsgemäß eingesetzten Polyurethane PU1 liegt vorzugsweise im Bereich von 500 bis 30 000 und insbesondere im Bereich von 1 000 bis 10 000. Die Molekulargewichte lassen sich durch konventionelle Gelpermeationschromatographie (Polystyrolstandard, Eluent: Tetrahydrofuran, UV-Detektion) ermitteln.

Die Herstellung der Polyurethane PU1 ist dem Fachmann hinreichend bekannt und beispielsweise in der EP-A 704 469 beschrieben, auf deren Offenbarung hiermit in vollem Umfang Bezug genommen wird.

Strahlungshärtbare Zubereitungen auf der Basis der Polyurethane PU1 weisen in der Regel die Form wässriger Dispersionen des Polyurethans PU1 auf. Der Gehalt an Polyurethan PU1 in dieser Dispersion liegt in der Regel im Bereich von 5 bis 70 Gew.-%, bevorzugt im Bereich von 20 bis 50 Gew.-% und insbesondere bei etwa 30 bis 45 Gew.-%, bezogen auf das Gesamtgewicht der Dispersion.

Eine weitere bevorzugte Ausführungsform der vorliegenden Erfindung betrifft die Verwendung strahlungshärtbarer Zubereitungen, die wenigstens ein aliphatisches Polyurethanacrylat PU2, d. h. ein Polyurethan mit Acrylat- bzw. Methacrylatgruppen auf der Basis aliphatischer Di- oder Poylisocyanate, als Polymer P1 enthalten. Die in Frage kommenden Polyurethanacrylate PU2 sind vorzugsweise ausgewählt unter den Umsetzungsprodukten aus wenigstens einem Polyisocyanat oder einem Isocyanatgruppen enthaltenden Polyurethan, die mindestens 3 Isocyanatgruppen aufweisen, mit wenigstens einem der oben beschriebenen Ester und/oder Amide der Acrylsäure bzw. der Methacrylsäure, die noch wenigstens eine freie OH- und/oder eine NH₂-Gruppe aufweisen.

Beispiele für geeignete Polyisocyanate mit wenigstens 3 Isocyanatgruppen sind die Isocyanurate und die Biurete der oben genannten Diisocyanate, z. B. Diisocyanurate des Isophorondiisocyanats, des Hexamethylendiisocyanats, des Trimethylhexamethylendiisocyanats und/oder des Dicyclohexylen-4,4'-diisocyanats. Geeignete Polyurethane mit wenigstens drei Isocyanatgruppen sind auch die Umsetzungsprodukte aus wenigstens einem drei- oder höherwertigem Alkohol, wie Glycerin, Trimethylolethan, Trimethylolpropan, Trimethylolbutan, Pentaerythrit, Ditrimethylolpropan, Erythrit, Sorbit oder Mannit, mit einem der oben beschriebenen aliphatischen Di- oder Polyisocyanate, wobei das molare Verhältnis von Isocyanatgruppen zu OH-Gruppen vorzugsweise im Bereich von 1:1,5 bis 1:3 und insbesondere im Bereich von 1:1,5 bis 1:2,5 liegt. Die so erhältlichen Polyisocyanatverbindungen werden dann mit den OH- bzw. NH₂-Gruppen enthaltenden Verbindungen zu den entsprechenden Polyurethanacrylaten umgesetzt.

Die Polyurethanacrylate PU2 weisen vorzugsweise gewichtsmittlere Molekulargewichte im Bereich von 500 bis 10 000 und vorzugsweise im Bereich von 800 bis 3 000 auf. Ihr Gehalt an Acrylat bzw. Methacrylateinheiten liegt in der Regel im Bereich von 0,1 bis 1,0, vorzugsweise 0,1 bis 0,8 und insbesondere 0,1 bis 0,6 mol/100 g PU2.

Die aliphatischen Polyurethanacrylate PU2 können auch mit Aminen modifiziert sein. Hierunter ist analog zu den aminmodifizierten Polyacrylaten (s. u.) zu verstehen, dass die Acrylat- bzw. Methacrylatgruppen in den Polyurethanacrylaten PU2 durch Umsetzung mit den oben genannten primären oder sekundären Aminen teilweise in ihre Michael-Additions-Produkte überführt werden. Derartige aminmodifizierte Polyurethanacrylate können auch Harnstoffgruppen enthalten, die bei der Reaktion von nichtreagiertem Isocyanat mit den primären oder sekundären Aminen gebildet werden. Derartige Amin- und Harnstoffgruppen enthaltende Polyurethanacrylate sind aus der EP-A 447 845 bekannt, auf die hiermit in vollem Umfang Bezug genommen wird.

Weitere bevorzugte Ausführungsformen sind strahlungshärtbare Zubereitungen, die als Polymere P1 eine Kombination aus wenigstens einem Polyurethanacrylat, insbesondere einem aliphatischen Polyurethanacrylat PU2, und wenigstens einem weiteren, davon verschiedenen Polymeren P1 mit ethylenisch ungesättigten Doppelbindungen, umfassen. Als weiteres Polymer P1 werden bevorzugt Polyurethanacrylate, Polyetheracrylate und/oder Polyesteracrylate, die gegebenenfalls mit Aminen modifiziert sind. Hierbei weisen sowohl das aliphatische Polyurethanacrylat PU2 als auch das weitere ethylenisch ungesättigte Polymer P1 zahlenmittlere Molekulargewichte im Bereich von 500 bis 10 000 und insbesondere im Bereich von 800 bis 3 000 auf. Zur Einstellung einer geeigneten Verarbeitungsviskosität werden derartige Polymerkombinationen vorzugsweise in Reaktivverdünnern und insbesondere in Alkylenglykoldiacrylaten bzw. -dimethacrylaten oder Polyalkylenglykolacrylaten bzw. -methacrylaten formuliert.

Neben den Polymeren P1 können die strahlungshärtbaren Zubereitungen auch niedermolekulare, von P1 verschiedene Substanzen aufweisen, die sich auf kationischem oder radikalischem Wege polymerisieren lassen. Hierbei handelt es sich in der Regel um Verbindungen S, die wenigstens eine ethylenisch ungesättigte Doppelbindung und/oder eine Epoxygruppe aufweisen und ein Molekulargewicht <800 g/mol besitzen. Derartige Verbindungen S dienen in der Regel dazu, die gewünschte verarbeitungsviskosität der strahlungshärtbaren Zubereitungen einzustellen. Dies ist insbesondere dann von Bedeutung, wenn die Zubereitung keine oder nur in untergeordnetem Maße weitere Verdünnungsmittel, wie Wasser und/oder organische, inerte Lösungsmittel enthält. Derartige Verbindungen S werden daher auch als Reaktivverdünner bezeichnet. Der Anteil an Reaktivverdünner, bezogen auf die Gesamtmenge von P1 und S in der strahlungshärtbaren Zubereitung, liegt im Bereich von 0 bis 50 Gew.-%.

Als Reaktivverdünner S eignen sich beispielsweise vinylgruppenhaltige Monomere, insbesondere N-Vinylverbindungen, wie N-Vinylpyrrolidon, N-Vinylcaprolactam und N-Vinylformamid, weiterhin Vinylether, wie Ethyl-, Propyl-, Isopropyl-, Butyl-, Isobutyl-, tert.-Butyl-, Amyl-, 2-Ethylhexyl-, Dodecyl-, Octadecyl- und Cyclohexylvinylether, Ethylenglykolmono- und -divinylether, Di-, Tri- und Tetraethylenglykolmono- und -divinylether, Polyethylenglykoldivinylether, Ethylenglykolbutylvinylether, Triethylenglykolmethylvinylether, Polyethylenglykolmethylvinylether, Cyclohexandimethanolmon- und -divinylether, Trimethylolpropantrivinylether, Aminopropylvinylether, Diethylaminoethylvinylether und Polytetrahydrofurandivinylether, Vinylester wie Vinylacetat, -propionat, -stearat und -laurat und Vinylaromaten wie Vinyltoluol, Styrol, 2- und 4-Butylstyrol und 4-Decylstyrol sowie acrylhaltige Monomere, z. B. Phenoxyethylacrylat, tert.-Butylcyclohexylacrylat und Tetrahydrofurfuryl(meth)acrylat.

Vinylgruppenhaltige Verbindungen können auch direkt als kationisch polymerisierbare Verbindungen S eingesetzt werden. Weiterhin geeignete Verbindungen S sind Epoxygruppen-haltige Verbindungen, wie Cyclopentenoxid, Cyclohexenoxid, epoxidiertes Polybutadien, epoxidiertes Sojabohnenöl, (3',4'-Epoxycyclohexylmethyl))-3,4-expoxycyclohexancarboxylat und Glydidylether, z. B. Butandioldiglycidylether, Hexandioldiglycidylether, Bisphenol-A-diglycidylether und Pentaerytrithdiglycidylether, wobei ebenfalls kationisch polymerisierbare Monomere, z. B. ungesättigte Aldehyde und Ketonen, Diene, wie Butadien, Vinylaromaten, wie Styrol, N-substituierte Vinylamine, wie Vinylcarbazol, und cyclische Ether, wie Tetrahydrofuran, mitverwendet werden können.

Ferner können als Reaktivverdünner S auch die Ester ethylenisch ungesättigter Carbonsäuren mit niedermolekularen, zwei- oder mehrwertigen Alkoholen, vorzugsweise die Acrylsäure- und Methacrylsäureester und insbesondere die Acrylsäureester eingesetzt werden, wobei die Alkohole neben den Hydroxylgruppen vorzugsweise keine weiteren funktionellen Gruppen oder allenfalls Ethergruppen aufweisen.

Derartige Alkohole umfassen z. B. Ethylenglykol, Propylenglykol und deren höherkondensierte Verteter, z. B. Diethylenglykol, Triethylenglykol, Dipropylenglykol und Tripropylenglykol, Butandiol, Pentandiol, Hexandiol, Neopentylglykol, alkoxylierte phenolische Verbindungen, wie ethoxylierte und propoxylierte Bisphenole, Cyclohexandimethanol, drei- und höherwertige Alkohole, wie Glycerin, Trimethylolpropan, Butantriol, Trimethylolethan, Pentaerythrit, Ditrimethylolpropan, Dipentaerythrit, Sorbit, Mannit und die entsprechenden alkoxylierten, insbesondere ethoxy- und propoxylierten Alkohole.

Bevorzugte Reaktivverdünner S sind die Veresterungsprodukte der vorgenannten zwei- oder mehrwertigen Alkohole mit Acrylsäureund/oder Methacrylsäure. Derartige Verbindungen werden allgemein als Polyacrylate bzw. Polyetheracrylate bezeichnet. Besonders bevorzugt sind Hexandioldiacrylat, Tripropylenglykoldiacrylat und Trimethylolpropantriacrylat. Derartige Verbindungen sind z. B. in der EP-A 624 610 und in der DE-A 37 06 355 offenbart.

In einer bevorzugten Ausführungsform sind die vorgenannten Polyacrylate bzw. Polyetheracrylate mit primären und/oder sekundären Aminen modifiziert. Geeignete Amine umfassen sowohl primäre als auch sekundäre aliphatische Amine, wie n-Butylamin, n-Hexylamin, 2-Ethylhexylamin, Dodecylamin, Octadecylamin, Di-n-butylamin, cycloaliphatische Amine, wie Cyclohexylamin, heterocyclische Amine, wie Piperidin, Piperazin, 1-Ethylpiperazin und Morpholin, heterocyclische Gruppen enthaltende primäre Amine, wie N-(Aminoethyl)imidazol, N-(Aminoethyl)morpholin, Tetrahydrofurfurylamin, 2-Aminoethylthiophen. Ferner sind geeignet Alkanolamine, wie Ethanolamin, 3-Aminopropanol und Monoisopropanolamin, sowie ferner Alkoxyalkylamine, wie Methoxypropylamin und Aminoethoxyethanol. Das Molverhältnis von Amin- zu Acrylat- bzw. Methacrylatgruppen in den aminmodifizierten Polyacrylaten bzw. Polyetheracrylaten liegt vorzugsweise im Bereich von 0,01:1 bis 0,3:1. Beispiele für aminmodifizierte Polyacrylate bzw. Polyetheracrylate finden sich in der DE-A 37 06 355, auf deren Inhalt hiermit in vollem Umfang Bezug genommen wird. Derartige aminmodifizierte Polyacrylate bzw. Polyetheracrylate sind darüber hinaus kommerziell erhältlich, beispielsweise als BASF Laromer®-Marken LR 8956, LR 8889, LR 8869, LR 8894, PO 83F und PO 84F.

Die erfindungsgemäß zur Anwendung kommenden strahlungshärtbaren Zubereitungen umfassen grundsätzlich alle flüssigen bzw. fließfähigen Formulierungen der Polymere P1, d. h. Lösungen oder Dispersionen und, sofern die Polymere flüssig sind, auch deren Reinformen.

Ferner sind auch pulverförmige Zubereitungen von der vorliegenden Erfindung mit umfasst, wie sie beispielsweise zur Pulverbeschichtung metallischer Oberflächen bekannt sind. In Frage kommen auch sogenannte "hot-melt"-Formulierungen, die erst bei erhöhter Temperatur fließfähig werden. Je nach Art der Zubereitung enthalten die strahlungshärtbaren Zubereitungen übliche Hilfsmittel, wie Verdicker, Verlaufshilfsmittel, Entschäumer, UV-Stabilisatoren, Emulgatoren und/oder Schutzkolloide und Füllstoffe. Geeignete Hilfsmittel sind dem Fachmann hinreichend aus der Lack-Beschichtungs-Technologie bekannt. Geeignete Füllstoffe, insbesondere für wässrige Dispersionen der Polymere P1 umfassen unter anderem Silikate, die durch Hydrolyse von Siliciumtetrachlorid erhältlich sind (Aerosil® der Fa. Degussa), Kieselerde, Talkum, Aluminiumsilikate, Magnesiumsilikate, Calciumcarbonate etc. Geeignete Stabilisatoren umfassen typische UV-Absorber, wie Oxanilide, Triazine, Benzotriazole (erhältlich als Tinuvin®-Marken der Ciba Geigy) und Benzophenone. Diese können in Kombination mit üblichen Radikalfängern, beispielsweise sterisch gehinderten Aminen, z. B. 2,2,6,6-Tetramethylpiperidin und 2,6-Di-tert.-butylpiperidin (HALS-Verbindungen) eingesetzt werden. Stabilisatoren werden üblicherweise in Mengen von 0,1 bis 5,0 und vorzugsweise 0,5 bis 2,5 Gew.-%, bezogen auf die in der Zubereitung enthaltenen, polymerisierbaren Komponenten, eingesetzt.

Sofern die Aushärtung mittels UV-Strahlung erfolgt, enthalten die erfindungsgemäß zur Anwendung kommenden Zubereitungen wenigstens einen Photoinitiator. Hierbei ist zwischen Photoinitiatoren für radikalische Härtungsmechanismen (Polymerisation ethylenisch ungesättigter Doppelbindungen) und Photoinitiatoren für kationische Härtungsmechanismen (kationische Polymerisation ethylenisch ungesättigter Doppelbindungen oder Polymerisation Epoxygruppen enthaltender Verbindungen) zu unterscheiden. Bei der Härtung mittels Strahlung energiereicher Elektronen (Elektronenstrahlhärtung) kann auf den Einsatz von Photoinitiatoren verzichtet werden.

Geeignete Photoinitiatoren für radikalische Photopolymerisationen, also die Polymerisation ethylenisch ungesättigter Doppelbindungen sind z. B. Benzophenon und Benzophenonderivate, wie 4-Phenylbenzophenon und 4-Chlorbenzophenon,Michlers Keton, Anthron, Acetophenonderivate, wie 1-Benzoylcyclohexan-1-ol, 2-Hydroxy-2,2-dimethylacetophenon und 2,2-Dimethoxy-2-phenylacetophenon, Benzoin und Benzoinether, wie Methyl-, Ethyl- und Butylbenzoinether, Benzilketale, wie Benzildimethylketal, 2-Methyl-1-(4-(methyl-thio)phenyl]-2-morpholinopropan-1-on, Anthrachinon und seine Derivate wie β-Methylanthrachinon und tert.-Butylanthrachinon, Acylphosphinoxide, wie 2,4,6-Trimethylbenzoyldiphenylphosphinoxid,.Ethy1-2,4,6-trimethylbenzoylphenylphosphinat und Bisacylphosphinoxide.

Geeignete Photoinitiatoren für kationische Photopolymerisationen, also die Polymeristion von Vinylverbindungen oder epoxygruppenhaltigen Verbindungen, sind z. B. Aryldiazoniumsalze, wie 4-Methoxybenzoldiazoniumhexafluorophosphat, Benzoldiazoniumtetrafluoroborat und Toluoldiazoniumtetrafluoroarsenat, Aryliodoniumsalze, wie Diphenyliodoniumhexafluoroarsenat, Arylsulfoniumsalze, wie Triphenylsulfoniumhexafluorosphosphat, Benzol- und Toluolsulfoniumhexafluorophosphat und Bis-[4-diphenylsulfoniophenyl]sulfidbishexafluorophosphat, Disulfone, wie Diphenyldisulfon und Phenyl-4-tolyldisulfon, Diazodisulfone, Imidotriflate, Benzointosylate, Isochinoliniumsalze, wie N-Ethoxyisochinoliniumhexafluorophosphat, Phenylpyridiniumsalze, wie N-Ethoxy-4-phenylpyridiniumhexafluorophosphat, Picoliniumsalze, wie N-Ethoxy-2-picoliniumhexafluorophosphat, Ferroceniumsalze, Titanocene und Titanoceniumsalze.

Die vorgenannten Photoinitiatoren werden, sofern erforderlich, in Mengen von 0,05 bis 20 Gew.-%, vorzugsweise 0,1 bis 10 Gew.-% und insbesondere 0,1 bis 5 Gew.-%, bezogen auf die polymerisierbaren Komponenten der erfindungsgemäßen Zubereitungen eingesetzt.

Die erfindungsgemäß zur Anwendung Kommenden strahlungshärtbaren Zubereitungen können auch Polymere enthalten, die kationisch polymerisierbare Gruppen, insbesondere Epoxygruppen aufweisen. Hierzu zählen Copolymerisate ethylenisch ungesättigter Monomere, die Glycidylester ethylenisch ungesättigter Carbonsäuren und/oder ethylenisch ungesättigte Glycidylether als Comonomere einpolymerisiert enthalten. Hierzu zählen auch die Glycidylether OH-Gruppen-enthaltender Polymere wie OH-Gruppen-enthaltende Polyether, Polyester und Polyurethane oder Novolacke. Hierzu zählen ferner die Glycidylester Carbonsäure-Gruppen-enthaltender Polymere. Die erfindungsgemäß zur Anwendung Kommenden Zubereitungen können, sofern eine kationisch polymerisierbare Komponente gewünscht wird, anstelle oder zusammen mit den kationisch polymerisierbaren Polymeren eine niedermolekulare, kationisch polymerisierbare Verbindung, beispielsweise einen Di- oder Polyglycidylether eines niedermolekularen Di- oder Polyols (s. o.) oder den Di- oder Polyester einer niedermolekularen Di- oder Polycarbonsäure, enthalten, z. B. einen der oben aufgeführten, kationisch polymerisierbaren Reaktivverdünner.

Die erfindungsgemäß zunächst zur Anwendung kommenden, Zubereitungen weisen konventionelle Polymerisate P2, d. h. Polymerisate, die keine ethylenisch ungesättigten Doppelbindungen auf. Die Polymerisate P2 weisen eine Glasübergangstemperatur unterhalb 50 °C, vorzugsweise < 40 °C auf. Hierbei wird unter der Glasübergangstemperatur die "Midpoint temperature" nach ASTM D 3418-82 verstanden, ermittelt durch Differenzialthermoanalyse (DSC; vergleiche auch R. Zosel, Farbe und Lack 82 (1976), 125-134).

In der Regel sind derartige konventionelle Polymerisate aus radikalisch polymerisierten, ethylenisch ungesättigten Monomeren aufgebaut, wobei 65 bis 100 Gew.-%, vorzugsweise 80 bis 100 Gew.-% und insbesondere 90 bis 99,9 Gew.-% der zu polymerisierenden Monomere ausgewählt sind unter Monomeren A, die vinylaromatische Verbindungen, Vinylester aliphatischer Carbonsäuren mit 1 bis 12 C-Atomen, C₁-C₁₀-Alkylacrylate und C₁-C₁₀-Alkylmethacrylate umfassen. Vinylaromatische Monomere umfassen insbesondere Styrol, α-Methylstyrol, Vinyltoluole und Chlorstyrol. Die Vinylester umfassen insbesondere Vinylacetat, Vinylpropionat und Vinylversatat® (= Vinylester der Versatic®säuren).Die Acrylate bzw. Methacrylate umfassen insbesondere die Ester der Acrylsäure bzw. Methacrylsäure mit Methanol, Ethanol, n-Propanol, Isopropanol, n-, Isound tert.-Butanol, n-Pentanol, n-Hexanol, 2-Ethylhexanol, n-Octanol, Cyclohexanol und ganz besonders bevorzugt Methanol, n-Butanol, tert.-Butanol und 2-Ethylhexanol. Ferner umfassen die zu polymerisierenden Monomere bis zu 35 Gew.-%, vorzugsweise bis zu 20 Gew.-% und insbesondere 0,1 bis 10 Gew.-% Monomere B, die mit den Monomeren A polymerisierbar sind. Monomere B umfassen insbesondere Acrylnitril, Methacrylnitril, α-Olefine, wie Ethylen, Propen und Isobuten, Diene, wie Butadien und Isopren, Vinylchlorid, Vinylidenchlorid, Acrylsäure, Methacrylsäure, Itaconsäure, Maleinsäure, Fumarsäure, die Amide dieser Säuren, die N-Alkylolamide dieser Säuren, insbesondere N-Methylol(meth)acrylamid, Hydroxyalkylester dieser Säuren, insbesondere 2-Hydroxyethyl(meth)acrylat und Hydroxypropyl(meth)acrylat sowie ethylenisch ungesättigte Sulfonsäuren, z. B. Vinylsulfonsäure, Styrolsulfonsäure und Arcylamido-2-methylpropansulfonsäure. Vorzugsweise sind die Monomeren B ausgewählt unter Acrylsäure, Methacrylsäure, deren Amiden, Acrylamido-2-methylpropansulfonsäure, Acrylnitril und Methacrylnitril.

Die Einstellung der gewünschten Glasübergangstemperatur kann durch Wahl geeigneter Kombinationen der Monomere A, insbesondere durch Kombination wenigstens eines "harten" Monomers, dessen Homopolymerisat einer Glasübergangstemperatur von oberhalb 60 °C zustrebt, und wenigstens eines "weichen" Monomers, dessen Homopolymerisat einer Glasübergangstemperatur unterhalb 30 °C zustrebt, erzielt werden. Geeignete Monomerkombinationen sind dem Fachmann grundsätzlich bekannt, z. B. aus der EP-A 469 295, oder können durch Anwendung der Beziehung von Fox (T.G. Fox, Bull. Am. Phys. Soc. Ser II, 1 (1956), 123 ) in bekannter Weise ermittelt werden. Wichtige Monomerkombinationen, die für die Einstellung der gewünschten Glasübergangstemperatur geeignet sind umfassen Styrol/2-Ethylhexyl-acrylat und/oder n-Butylacrylat; Methylmethacrylat/2-Ethylhexyl-acrylat und/oder n-Butylacrylat; Methylmethacrylat und tert.-Butylmethacrylat/2-Ethylhexylacrylat und/oder n-Butylacrylat.

Die Herstellung derartiger Polymerisate P2 ist dem Fachmann hinreichend bekannt und erfolgt in der Regel durch radikalische, wässrige Emulsionspolymerisation der vorgenannten Monomere in Gegenwart wenigstens eines radikalischen Polymerisationsinitiators und gegebenenfalls einer oberflächenaktiven Substanz, ausgewählt unter Emulgatoren und/oder Schutzkolloiden. Geeignete konventionelle Polymere sind beispielsweise in der EP-A 469 295 und der WO 96/33143 beschrieben, auf deren Inhalt hiermit in vollem Umfang Bezug genommen wird. In einer bevorzugten Ausführungsform der Erfindung werden derartige konventionelle Polymere P2 in Form ihrer wässrigen Dispersionen mit wässrigen Dispersionen der Polymere P1, beispielsweise der Polyurethane PU1, z. B. den Polyurethanen der EP-A 704 469, formuliert. Dispersionen von Polymeren P1 sind beispielsweise auch aus der EP-A 12 339 bekannt, auf die hiermit in vollem Umfang Bezug genommen wird.

Erfindungsgemäß werden die strahlungshärtbaren Zubereitungen zur Beschichtung von Formkörpern, die wenigstens ein mineralisches Bindemittel enthalten (mineralische Formkörper), verwendet. Hierzu werden die strahlungshärtbaren Zubereitungen in bekannter Weise, z. B. durch Spritzen, Spachteln, Rakeln, Bürsten, Rollen oder Gießen auf den mineralischen Formkörper aufgebracht. Denkbar ist auch, dass die Zubereitung durch "hot-melt"-Verfahren oder durch Pulverbeschichtungsverfahren auf den mineralischen Formkörper aufgebracht werden. Die Beschichtungsstärke liegt in der Regel im Bereich von 3 bis 200 g/m², vorzugsweise 10 bis 100 g/m², bezogen auf die in der Zubereitung enthaltenen, polymerisierbaren Komponenten P1 und gegebenenfalls S. Das Aufbringen kann sowohl bei Raumtemperatur als auch bei erhöhter Temperatur, vorzugsweise jedoch nicht oberhalb 100 °C, erfolgen. Anschließend werden die Beschichtungen durch Einwirkung energiereicher Strahlung, vorzugsweise durch UV-Strahlung der Wellenlänge 250 bis 400 nm oder durch Bestrahlung mit energiereichen Elektronen (Elektronstrahlung; 150 bis 300 keV) gehärtet. Als UV-Quellen dienen beispielsweise Hochdruckquecksilberdampflampen, z. B. die CK- oder CK1-Strahler der Fa. IST. Die üblicherweise zur Vernetzung ausreichende Strahlungsdosis liegt im Bereich von 80 bis 3 000 mJ/cm². Gegebenenfalls enthaltenes Lösungsmittel, insbesondere Wasser, wird vor der Aushärtung in einen separaten, der Härtung vorgelagerten Trocknungsschritt, beispielsweise durch Erwärmen auf Temperaturen im Bereich von 40 bis 80 °C oder durch Einwirkung von IR-Strahlung getrocknet.

Vor dem Aufbringen der strahlungshärtbaren Zubereitungen wird der mineralische Formkörper Zunächst mit einer konventionellen Beschichtungsmasse beschichtet, die eines der oben beschriebenen, konventionellen Polymere P2 als Bindemittel enthält. Darüber hinaus können erste Beschichtungsmassen neben dem konventionellen Polymer P2 auch ein strahlungshärtbares, ethylenisch ungesättigtes Polymer, vorzugsweise in dispergierter Form, z. B. ein Polyurethan PU1 enthalten. In diesem Fall werden PU1 und P2 vorzugsweise im Gewichtsverhältnis PU1 : P2 im Bereich von 20 : 1 bis 1 : 20, vorzugsweise 10 : 1 bis 1 : 10 formuliert.

Bei den Erstbeschichtungen handelt es sich erfindungsgemäß um Beschichtungen auf der Basis wässriger Polymerisatdispersionen der Polymere P2 und gegebenenfalls P1. Bei den Polymeren P2 handelt es sich erfindungsgemäß um Polymere P2, die durch radikalische wässrige Emulsionspolymerisation hergestellt wurden. Diese Dispersionen können nach bekannten Verfahren mit strahlungshärtbaren Polymeren P1 formuliert werden. Hierbei kann es erforderlich sein, P1 oder ein Polymerblend nach bekanntem Verfahren in eine wässrige Dispersion zu überführen. Bevorzugt werden jedoch wässrige Dispersionen von konventionellen Polymeren P2 mit in wässriger Dispersion vorliegenden, strahlungshärtbaren Polymeren P1 formuliert.

Solche Beschichtungsmassen enthalten in der Regel neben dem polymeren Bindemittel Füllstoffe und/oder Pigmente sowie übliche Hilfsmittel, z. B. Netzmittel, Viskositätsmodifizierer, Dispergiermittel, Entschäumer, Konservierungs- und Hydrophobiermittel, Biozide, Fasern oder weitere übliche Bestandteile. Geeignete Füllstoffe sind beispielsweise Alumosilikate, Silikate, Erdalkalicarbonate, vorzugsweise Calciumcarbonat in Form von Calcit oder Kreide, Dolomit sowie Aluminiumsilikate oder Magnesiumsilikate, z. B. Talk. Typische Pigmente sind Titandioxyd, Eisenoxide und Bariumsulfat.

Der Feststoffgehalt geeigneter Erstbeschichtungen liegt in der Regel im Bereich von 20 bis 80 Gew.-%, vorzugsweise 30 bis 60 Gew.-.%, bezogen auf das Gesamtgewicht der konventionellen Beschichtung, davon entfallen vorzugsweise wenigstens 30 Gew.-% und vorzugsweise wenigstens 50 Gew.-% und insbesondere 50 bis 90 Gew.-% auf das polymere Bindemittel, und vorzugsweise nicht mehr als 70 Gew.-% und insbesondere 10 bis 50 Gew.-% auf Pigmente und/oder Füllstoffe.

Als flüssige Komponente enthalten die Erstbeschichtungsmassen im Wesentlichen Wasser und gegebenenfalls eine mit Wasser mischbare, organische Flüssigkeit, beispielsweise einen Alkohol, wie Glykol oder Glycerin, einen Polyetheralkohol oder auch technische Lösungsmittelgemische wie Texanol® (Eastman Kodak) oder Lusolvan® FBM (BASF). Sofern erforderlich, werden konventionelle Beschichtungsmassen in einer Nassbeschichtungsstärke im Bereich von 50 bis 500 g/m², insbesondere 70 bis 300 g/m² in bekannter Weise, beispielsweise durch Spritzen, Spachteln, Rakeln, Bürsten, Rollen oder Gießen auf den mineralischen Formkörper aufgebracht. Vor Aufbringung der strahlungshärtbaren Zubereitung wird dann diese erste Beschichtung bei Raumtemperatur oder vorzugsweise bei erhöhter Temperatur, beispielsweise bei Temperaturen im Bereich von 40 bis 100 °C, getrocknet.

Das erfindungsgemäße Verfahren zum Beschichten der Oberflächen mineralischer Formkörper ist grundsätzlich auf alle Formkörper, die ein mineralisches Bindemittel enthalten, anwendbar. Die Beschichtungen können sowohl auf ausgehärtete mineralische Formkörper als auch auf frisch zubereitete ("grüne") mineralische Formkörper angewendet werden. Derart beschichtete mineralische Formkörper weisen auch nach längerer Feuchtigkeitseinwirkungen keine Ausblühungen auf. Ferner bleibt die Beschichtung im Unterschied zu den bisher bekannten Beschichtungen auch bei längerer Einwirkung von Feuchtigkeit intakt, d. h. Quellungsvorgänge, wie ein Aufweichen der Beschichtung oder die Bläschenbildung, werden nicht beobachtet.

Seine vorteilhaften Wirkungen entfaltet das erfindungsgemäße Verfahren insbesondere bei mineralischen Formkörpern, die Zement als mineralisches Bindemittel enthalten (Betonsteine und Faserzementplatten). Unter Betonsteinen versteht man geformte Gebilde aus Beton und/oder Gasbeton, z. B. Platten, Rohre und insbesondere Dachziegel (Betondachsteine). Der Betonstein wird aus fertiggemischtem Beton durch ein Strangpressverfahren in bekannter Weise hergestellt. Die erfindungsgemäßen Zubereitungen bieten nunmehr den Vorteil, dass sie nicht nur auf den abgebundenen, sondern auch auf den frisch zubereiteten, nichtabgebundenen ("grünen") Betonstein aufgebracht werden kann. Die in dem frisch zubereiteten Betonstein enthaltene Restwassermenge von etwa 5 bis 10 Gew.-% führt überraschenderweise nicht zur Quellung und zur Bläschenbildung. Auch Kalkausblühungen, bedingt durch das Wasser, welches durch die Beschichtung diffundiert, werden nicht beobachtet.

Die Vorteile des erfindungsgemäßen Verfahrens kommen auch bei mineralischen Formkörpern zum Tragen, die mit einem Zementslurry beschichtet sind. Dieser Zementslurry umfasst in der Regel übliche Pigmente, einen Zement als mineralisches Bindemittel, übliche Hilfsmittel und Wasser in geeigneter Menge und wird auf den mineralischen Formkörper, vorzugsweise einen Betonstein, der noch nicht endgültig abgebunden hat, aufgebracht. Die Zementslurry-Schicht weist im abgebundenen zustand in der Regel eine Schichtdicke im Bereich von 200 µm bis 2 000 µm auf .

Ferner erweisen sich die erfindungsgemäßen Beschichtungen ähnlich vorteilhaft bei sog. Faserzementplatten, d. h. flächigen mineralischen Formkörpern, die Zement als Bindemittel enthalten und die mineralische oder organische Fasern, z. B. Polyester- und/oder Polyamidfasern als Zuschläge enthalten. Auch die erfindungsgemäßen Faserzementplatten zeigen bei intensiver Bewitterung keine Kalkausblühungen oder Quellungen der Schutzschicht. Das erfindungsgemäße, Verfahren ist somit für die Konservierung der mineralischen Formkörper vor Witterungseinflüssen besonders geeignet. Darüber hinaus zeigen die erfindungsgemäß beschichteten mineralischen Formkörper eine äußerst geringe Neigung zum Verblocken, auch bei längerfristiger hoher Belastung. Dieser vorteil kommt insbesondere bei Faserzementplatten zum Tragen, da diese häufig in gestapelter Form gelagert werden. Ferner zeichnen sich die Beschichtungen durch eine hohe Kratzfestigkeit, eine hohe Härte und gleichzeitig durch eine hohe Elastizität, d. h. Reißfestigkeit, aus.

### Beispiele

### I. Beschichtung von Betonsteinen

Als mineralischer Formkörper diente ein grüner Betonstein, der als Flachstein der Abmessungen 30 × 20 × 1,8 cm durch Extrusion eines Mörtels aus Sand (Korngröße bis zu 0,3 mm) und Zement (Gewichtsverhältnis 1 : 3) sowie Wasser bei einem Wasser/Zement-Gewichtsverhältnis von 0,4 hergestellt wurde.

Dieser grüne Betonstein wurde mit einer rotbraunen Farbe (Farbe 1) mittels einer Spritzpistole (etwa 2 bar Spritzdruck) gleichmäßig besprüht, bis eine Nassbeschichtungsstärke von 105 g/m² erreicht war. Anschließend wurde 8 Stunden bei 60 °C ausgehärtet. Als rotbraune Farbe diente eine mit einem Eisenoxid-Pigment versetzte Reinacrylat-Dispersion (auf der Basis von Methylmethacrylat/n-Butylacrylat; Gewichtsverhältnis 4,5/5,5) mit einem Feststoffgehalt von 60 Gew.-% und einer Pigmentvolumenkonzentration von 30 %, die zudem 0,5 Gew.-%, bezogen auf das Gesamtgewicht der Farbe, eines handelsüblichen Entschäumers, enthielt. Dieser Stein (Grundstein 1) wurde für die folgenden Beschichtungsexperimente verwendet.

### Vergleichsbeispiel V1

Ein Grundstein 1 wurde ein zweites Mal mit der Farbe 1 in der oben beschreibenen Weise bis zu einer Nassbeschichtungsstärke von 53 g/m² beschichtet und anschließend bei 60 °C 3 Stunden getrocknet.

### Vergleichsbeispiel V2

Der gemäß Vergleichsbeispiel V1 erhältliche beschichtete Stein wurde mit einer UV-Lampe (CK-Strahler der Firma IST) mit einer Intensität von 120 W/cm² bestrahlt.

### Vergleichsbeispiel V3

Ein Grundstein wurde ein zweites Mal mit der Farbe 1, die zusätzlich 0,5 Gew.-% Benzophenon, bezogen auf das Gesamtgewicht der Farbe, enthielt, in der oben beschriebenen Weise beschichtet bis eine Nassbeschichtungsstärke von 53 g/m² erreicht war. Anschließend wurde 3 Stunden bei 60 °C getrocknet.

### Vergleichsbeispiel V4

Der beschichtete Stein aus Vergleichsbeispiel V3 wurde mit einer UV-Lampe in der für Vergleichsbeispiel 2 beschriebenen Weise bestrahlt.

Für die Beispiele wurden folgende Handelsprodukte verwendet:
- Laromer®: LR 8949 der BASF: 40 gew.-%-ige wässrige Polyurethandispersion; Mₙ ca. 1 000; 0,17 mol Acrylatgruppen/100 g Harz,
- Laromer®: UA 19T der BASF: Polyurethanacrylat; Mₙ ca. 1500; 0,1 mol Acrylatgruppen/100 g Harz; 65 Gew.-% in Tripropylenglykoldiacrylat,
- Laromer®: PO 84 F der BASF: aminomodifiziertes Polyetheracrylat der BASF; Mₙ ca. 720; 0,41 mol Acrylatgruppen/100 g Harz,
- Laromer®: LR 8861 der BASF: aliphatisches Polyurethanacrylat; Mₙ ca. 1 200; 0,28 mol Doppelbindungen/100 g Harz; 70 Gew.-% in Dipropylenglykoldiacrylat,
- Laromer®: LR 8981 der BASF: aminomodifiziertes Polyesteracrylat; Mₙ ca. 1 100; 0,3 mol Doppelbindungen/100 g Harz,
- Laromer®: LR 8862 der BASF: aminomodifiziertes Polyurethanacrylat; Mₙ ca. 1 150; 0,21 mol Doppelbindungen/100 g Harz; 70 Gew.-% in Dipropylengloykoldiacrylat,
- Lucirin®: TPO-L der BASF: 2,4,6-Trimethylbenzoylethylphenylphosphinat,
- Irgacure®: 184 der Ciba-Spezialitätenchemie (1-Benzoyl-1-hydroxycyclohexan),
- Irgacure®: 500 der Ciba-Spezialitätenchemie (Mischung aus Benzophenon und 1-Benzoyl-1-hydroxycyclohexan im Gew.-Verhältnis 1:1),
- Tinuvin®: 400 der Ciba-Spezialitätenchemie (4,6-Bis-(2,4-dimethylphenyl)-2-(2-hydroxy-3-C12-C13-alkyloxy-2-hydroxypropyl-1-oxyphenyl)triazin),
- Tinuvin®: 292 der Ciba-Spezialitätenchemie (Diester der Sebacinsäure mit 2,2,6,6-Tetramethyl-4-hydroxypiperidin).

### Beispiel 1

Ein Grundstein 1 wurde mit einer strahlungshärtbaren Zubereitung aus
- 88,5: GT¹⁾ einer strahlungshärtbaren Polyurethandispersion Laromer@ LR 8949 der BASF,
- 0,5: GT eines Polyurethan-Verdickers (Acrysol@ RM 8 der Rohm&Haas),
- 0,2: GT Entschäumer (Dehydran® 1293 der Fa. Henkel),
- 2,1: GT einer 50 Gew-%-igen Lösung von Irgacure® 184 in Butylendiglykol
- 7,8: GT Wasser
mit einer Spritzpistole gleichmäßig beschichtet, bis ein Nassauftrag von etwa 40 g/m² erreicht war. Anschließend wurde 20 Minuten bei 60 °C getrocknet und dann mit einer UV-Lampe, wie in Vergleichsbeispiel V2 beschrieben, bestrahlt.
1) GT = Gewichtsteile

### Beispiel 2

Ein Grundstein 1 wurde mit einer strahlungshärtbaren Zubereitung aus
- 7,1: GT Polyurethanacrylat (Laromer® UA19T der BASF),
- 59,5: GT aminmodifiziertem Polyetheracrylat (Laromer® PO84F der BASF) und
- 2,9: GT Photoinitiator Irgacure® 500
- 19: GT Hexandioldiacrylat
mit einer Beschichtungsstärke von 25 g/m² mittels einer Fließbecherpistole beschichtet. Anschließend wurde wie in Beispiel 1 beschrieben bestrahlt.

### Beispiel 3

Ein Grundstein wurde mit einer strahlungshärtbaren Zubereitung aus
- 19: GT Hexandioldiacrylat
- 38,3: GT Polyurethanacrylat (Laromer® LR 8861 der BASF),
- 38,3: GT aminmodifiziertem Polyetheracrylat (Laromer® LR 8981 der BASF),
- 1,9: GT Photoinitiator Irgacure® 184,
- 1,0: GT Photoinitiator Lucirin® TPO-L
- 1,5: GT Stabilisatorsystem aus einem UV-Absorber und einem sterisch gehinderten Amin (Tinuvin® 400 und Tinuvin® 292 im Gewichtsverhältnis 2 : 1)
in einer Beschichtungsstärke von 25 g/m² beschichtet und anschließend wie in Beispiel 2 beschrieben bestrahlt.

### Beispiel 4

- 90: GT einer 50 Gew.-% Reinacrylatdispersion auf der Basis von Methylmethacrylat/n-Butylacrylat (5,5/4,5) und
- 10: GT Laromer® LR 8949 (40 Gew.-%) wurden zusammen mit
- 10: GT eines rotbraunen Oxydpigments und
- 0,5: GT eines handelsüblichen Entschäumers
zu einer Farbe 2 formuliert. Die Farbe 2 wurde auf einen frisch hergestellten Betonstein (s. o.) gleichmäßig aufgespritzt, bis eine Nassauftragsbeschichtungsstärke von 105 g/m² erreicht war. Anschließend wurde 8 Stunden bei 60 °C getrocknet (Grundstein 2).

Ein Grundstein 2 wurde mit der strahlungshärtbaren Zubereitung aus Beispiel 2 mit einer Auftragsstärke von 25 g/m² in der in Beispiel 2 beschriebenen Weise beschichtet und anschließend wie dort beschrieben ausgehärtet.

### II Anwendungstechnische Prüfung der beschichteten Betonsteine

Die in den Beispielen und Vergleichsbeispielen beschriebenen beschichteten Betonsteine wurden 7 Tage mit der beschichteten Seite auf ein 60 °C warmes Wasserdampfbad gelegt. Anschließend wurde der dem Wasserdampf ausgesetzte Bereich visuell hinsichtlich des Abperleffektes mit Noten von 0 bis 5 beurteilt. Hierunter wird verstanden, wie Wasser von einer Steinoberfläche abläuft. Note 0 bedeutet, dass das Wasser praktisch stehen bleibt (nicht-vorhandener Abperleffekt). Note 5 entspricht einem vollständigen Abperlen des Wassers von der Oberfläche. Ein geringer Abperleffekt geht mit einer starken Quellung der Beschichtung einher, wohingegen ein Abperleffekt mit der Note 5 bedeutet, dass trotz der siebentägigen Behandlung mit Wasserdampf die Oberfläche nicht gequollen ist.
Note 0: kein Abperleffekt
Note 1: schwach erkennbarer Abperleffekt
Note 2: erkennbarer Abperleffekt
Note 3: deutlicher Abperleffekt
Note 4: weitgehendes Abperlen
Note 5: nahezu vollständiges Abperlen

**Tabelle 1:**

| Abperleffekt bei beschichteten Betonsteinen, die 7 Tage Wasserdampf ausgesetzt waren | |
|---|---|
| Betonstein Bsp: | Note |
| | |
| V1 | 0 |
| V2 | 0 |
| V3 | 0 |
| V4 | 0 |
| 1 | 1 |
| 2 | 5 |
| 3 | 5 |
| 4 | 5 |

### III Herstellung beschichteter Faserzementplatten

Als mineralischer Formkörper wurde in den folgenden Beschichtungsbeispielen eine kommerziell erhältliche Faserzementplatte (ebene Fassadenplatte der Fa. Eternit) eingesetzt.

### Vergleichsbeispiel V5

Eine Faserzementplatte wurde in der in Beispiel 1 beschriebenen Weise mit einer Farbe 3 beschichtet, bis eine Nassbeschichtungsstärke von 80 g/m² erreicht war. Anschließend wurde 8 Stunden bei 60 °C getrocknet. Diese Platte wird im Folgenden als Grundplatte 1 bezeichnet.

Als Farbe 3 diente eine Zubereitung auf der Basis einer kommerziell erhältlichen Styrol/n-Butylacrylat-Dispersion (Gewichtsverhältnis 6,5/3,5). Die Farbe enthielt mikronisiertes Eisenoxidpigment, handelsübliches Titandioxid und 0,5 Gew.-% handelsüblichen Entschäumer und wies einen Feststoffgehalt von 41 Gew.-% und eine Pigmentvolumenkonzentrierung von 17% auf.

### Vergleichsbeispiel V6

Auf eine Grundplatte 1 wurden weitere 40 g/m² (Nassbeschichtungsstärke) der Farbe 3 aufgebracht und anschließend 8 Stunden bei 60 °C getrocknet.

### Vergleichsbeispiel V7

Eine Faserzementplatte wurde in der in Beispiel 1 beschriebenen Weise mit einer Farbe 4 beschichtet, bis eine Nassbeschichtungsstärke von 80 g/m2 erreicht war. Anschließend wurde 8 Stunden bei 60 °C getrocknet. Diese Platte wird im Folgenden als Grundplatte 2 bezeichnet.

Als Farbe 4 diente eine der Farbe 3 vergleichbare Zubereitung, mit dem Unterschied, dass anstelle einer Styrol/n-Butylacrylat-Dispersion eine Dispersion auf Basis von Methylmethacrylat/n-Butylacrylat (Gewichtsverhältnis 6,5/3,5) verwendet wurde.

### Vergleichsbeispiel V8

Auf eine Grundplatte 2 wurden analog Vergleichsbeispiel V6 weitere 40 g/m² der Farbe 4 aufgebracht und getrocknet.

### Beispiel 5

Eine strahlungshärtbare Zubereitung aus
38,8 GT Laromer® LR 8861,
38,3 GT Laromer® LR 8862,
19,0 GT Hexandioldiacrylat,
1,9 GT Photoinitiator (Irgacure® 184),
1,0 GT Photinitiator (Lucirin® TPO-L),
1,0 GT UV-Absorber (Tinuvin® 400) und
0,5 GT eines sterisch gehinderten Amins (HALS-Verbindung Tinuvin® 292)
wurde mit einer Beschichtungsstärke von 25 g/m² auf eine Grundplatte 1 aufgebracht. Anschließend wurde mit einem CK-Strahler der Firma IST mit einer Intensität von 120 W/cm² bestrahlt.

### Beispiel 6

Analog Beispiel 5 wurde eine Grundplatte 2 beschichtet.

### Beispiel 7

Eine strahlungshärtbare Zubereitung aus
38,3 GT Laromer® LR 8861,
38,3 GT Laromer® LR 8981,
19,0 GT Hexandioldiacrylat,
1,9 GT Photoinitiator (Irgacure® 184),
1,0 GT Photinitiator (Lucirin® TPO-L),
1,0 GT UV-Absorber (Tinuvin® 400) und
0,5 GT HALS-Verbindung (Tinuvin® 292)
wurde mit einer Beschichtungsstärke von 25 g/m² auf eine Grundplatte 1 aufgebracht. Anschließend wurde mit einem CK-Strahler der Firma IST mit einer Intensität von 120 W/cm² bestrahlt.

### Beispiel 8

Analog Beispiel 7 wurde eine Grundplatte 2 beschichtet.

### Beispiel 9

Eine strahlungshärtbare Zubereitung aus
38,3 GT Laromer® LR 8861,
38,3 GT Laromer® LR 8862,
19,0 GT Hexandioldiacrylat,
1,0 GT UV-Absorber (Tinuvin® 400) und
0,5 GT eines sterisch gehinderten Amins (HALS-Verbindung Tinuvin® 292)
wurde mit einer Beschichtungsstärke von 25 g/m² auf eine Grundplatte 1 aufgebracht. Anschließend wurde in einer Anlage für Elektronensrahlhärtung mit einer Intensität von 6 MRad bestrahlt.

### Beispiel 10

Beispiel 9 wurde mit einer veränderten strahlungshärtbaren Zubereitung wiederholt, in der das Laromer® LR 8862 durch Laromer® LR 8981 ersetzt worden war.

### IV Anwendungstechnische Prüfung der Faserzementplatten

Die erfindungsgemäß beschichteten Faserzementplatten der Beispiele 5 bis 10 sowie der Vergleichsbeispiele V5 und V8 wurden auf ihre Blockfestigkeit hin untersucht. Hierzu wurde die beschichtete Seite der Platten mit einem kreisformigen Stempel (d ca. 10 cm) mit 1 kg/cm² 16 Stunden bei 50 °C belastet. Es wurde beurteilt, ob sich der Stempel ohne Beschädigung der Beschichtung entfernen lässt. Note 0 bedeutet, dass die Beschichtung auch nach Entfernung des Stempels fehlerfrei ist. Bei Note 1 weist die Beschichtung im belasteten Bereich minimale Oberflächsenschäden auf. Note 2 entspricht punktuellen gut erkennbaren Schäden im belasteten Bereich. Note 3 entspricht einer teilweisen Zerstörung der Beschichtung im belasteten Bereich. Note 4 entspricht einer weitgehenden Zerstörung der Beschichtung im belasteten Bereich, und Note 5 einer vollständigen Zerstörung mit Beschädigung der nichtbelasteten Randbereiche.

**Tabelle 2:**

| Blockfestigkeit der beschichteten Faserzementplatten der Beispiele 5 bis 10, V6 und V8 | |
|---|---|
| Faserzementplatten Bsp. | Note |
| V6 | 2 |
| v8 | 2 |
| 5 | 0 |
| 6 | 0 |
| 7 | 0 |
| 8 | 0 |
| 9 | 0 |
| 10 | 0 |

## Patentansprüche

1. Verfahren zur Herstellung beschichteter Formkörper, die wenigstens ein mineralisches Bindemittel enthalten, **dadurch gekennzeichnet, dass** man
1) auf die Oberfläche des Förmkörpers zunächst wenigstens eine konventionelle Beschichtung aufbringt, die als Bindemittel ein durch rakikalische wässrige Emulsionspolymerisation erhältliches Polymerisat P2 mit einer Glasübergangstemperatur unterhalb 50°C enthält, welches keine ethylenisch ungesättigten Doppelbindungen aufweist;
2) eine strahlungshärtbare Zubereitung, die wenigstens ein Polymer P1 enthält, welches ethylenisch ungesättigte Doppelbindungen aufweist, auf die so beschichtete Oberfläche des Formkörpers aufbringt, gegebenenfalls vorhandenes Lösungsmittel entfernt, und
3) die aufgebrachte Zubereitung durch Bestrahlung mit UVoder Elektronenstrahlung härtet.

2. Verfahren nach Anspruch 1, **dadurch gekennzeichnet, dass** der Gehalt ethylenisch ungesättigter Doppelbindungen im Polymer P1 im Bereich von 0,01 bis 1,0 mol/100 g P1 liegt.

3. Verfahren nach Anspruch 1 oder 2, **dadurch gekennzeichnet, dass** die ethylenisch ungesättigten Doppelbindungen in P1 als Gruppe der allgemeinen Formel
- P-Z-X-CR¹=CHR²
vorliegen, worin
X eine Einfachbindung, CH₂ oder CO bedeutet,
Z für eine Einfachbindung, O oder NH steht,
P für einen zwei- oder höherwertigen organischen Rest mit 2 bis 10 Kohlenstoffatomen oder für eine Einfachbindung steht,
R¹ für Wasserstoff oder Methyl steht, und
R² Wasserstoff, Methyl oder, wenn X für CO steht, auch Phenyl oder CO₂Y bedeuten kann, worin Y für Wasserstoff oder für C₁-C₄-Alkyl steht.

4. Verfahren nach einem der vorhergehenden Ansprüche, **dadurch gekennzeichnet, dass** P1 ausgewählt ist unter ethylenisch ungesättigte Gruppen aufweisenden Siliconen, Polyurethanen, Polyestern, Polyethern, Epoxidharzen, Melaminharzen und Copolymerisaten auf der Basis von (Meth)acrylsäureestern.

5. Verfahren nach einem der vorhergehenden Ansprüche, wobei die strahlungshärtbare Zubereitung als Polymer P1 wenigstens ein in Wasser dispergierbares Polyurethan PU1 enthält.

6. Verfahren nach einem der vorhergehenden Ansprüche, **dadurch gekennzeichnet, dass** die strahlungshärtbare Zubereitung wenigstens ein Polymer P1 und wenigstens eine von P1 verschiedene, niedermolekulare Verbindung S mit einem Molekulargewicht M < 800 umfasst, die wenigstens eine ethylenisch ungesättigte Doppelbindung und/oder wenigstens eine Epoxygruppe aufweist.

7. Verfahren nach Anspruch 6, **dadurch gekennzeichnet, dass** die strahlungshärtbare Zubereitung als Polymer P1 ein aliphatisches Polyurethanacrylat PU2 und als niedermolekulare Komponente S ein mit Aminogruppen funktionalisiertes Polyacrylat enthält.

8. Verfahren nach einem der vorhergehenden Ansprüche, **dadurch gekennzeichnet, dass** die strahlungshärtbare Zubereitung wenigstens ein aliphatisches Polyurethanacrylat PU2 und wenigstens ein weiteres, davon verschiedenes Polymer P1, ausgewählt unter Polyurethanacrylaten, Polyetheracrylaten und Polyesteracrylaten enthält, die gegebenenfalls mit Aminen modifiziert sind.

9. Verfahren nach einem der vorhergehenden Ansprüche, wobei der zu beschichtenden, mineralische Formkörper ausgewählt ist unter Betonsteinen und Faserzementplatten.

10. Verfahren nach einem der vorhergehenden Ansprüche, **dadurch gekennzeichnet, dass** man die erste Beschichtung in Form einer wässrigen Beschichtungsmasse, die wenigstens ein konventionelles Emulsionspolymerisat P2 und gegebenenfalls ein strahlungshärtbares Polymer P1 enthält, auf den mineralischen Formkörper aufbringt, trocknet, anschließend auf die derart erhaltene Beschichtung eine strahlungshärtbare Zubereitung wie in einem der Ansprüche 1 bis 8 definiert aufbringt, gegebenenfalls trocknet und anschließend durch Bestrahlung mit UV- oder Elektronenstrahlung härtet.

11. Beschichteter, mineralischer Formkörper, erhältlich durch ein Verfahren gemäß einem der Ansprüche 1 bis 10.

## Claims

1. A process for producing coated moldings which comprise at least one mineral binder, which comprises
1) to the surface of the molding first applying at least one conventional coating which, as binder, comprises a polymer P2 with a glass transition temperature below 50°C, obtainable by aqueous free-radical emulsion polymerization and having no ethylenically unsaturated double bonds;
2) applying, to the resultant coated surface of the molding, a radiation-curable preparation which comprises at least one polymer P1 having ethylenically unsaturated double bonds, and, where appropriate removing solvent which is present, and
3) curing the applied preparation with UV radiation or electron beams.

2. A process as claimed in claim 1, wherein the content of ethylenically unsaturated double bonds in the polymer P1 is in the range from 0.01 to 1.0 mol/100 g of P1.

3. A process as claimed in claim 1 or 2, wherein the ethylenically unsaturated double bonds in P1 are present as a group of the formula
- P-Z-X-CR¹=CHR²
where
X is a single bond, CH₂ or CO,
Z is a single bond, O or NH,
P is an organic radical of valency 2 or higher having from 2 to 10 carbon atoms, or is a single bond,
R¹ is hydrogen or methyl, and
R² is hydrogen, methyl or, if X is CO, also phenyl or CO₂Y, where Y is hydrogen or C₁-C₄-alkyl.

4. A process as claimed in any one of the preceding claims, wherein P1 is selected from the class consisting of the silicones, polyurethanes, polyesters, polyethers, epoxy resins, melamine resins and (meth)acrylate-based copolymers having in each case ethylenically unsaturated groups.

5. A process as claimed in any one of the preceding claims, where the radiation-curable preparation comprises, as polymer P1, at least one water-dispersible polyurethane PU1.

6. A process as claimed in any one of the preceding claims, wherein the radiation-curable preparation comprises at least one polymer P1 and at least one low-molecular-weight commpound S different from P1 which has a molecular weight M < 800 and which has at least one ethylenically unsaturated double bond and/or at least one epoxy group.

7. A process as claimed in claim 6, wherein the radiation-curable preparation comprises, as polymer P1, an aliphatic polyurethane acrylate PU2 and, as low-molecular-weight component S, a polyacrylate functionalized with amino groups.

8. A process as claimed in any one of the preceding claims, wherein the radiation-curable preparation comprises at least one aliphatic polyurethane acrylate PU2 and at least one other polymer P1 different therefrom, which is selected from the class consisting of polyurethane acrylates, polyether acrylates and polyester acrylates, modified with amines, where appropriate.

9. A process as claimed in any one of the preceding claims, where the mineral molding to be coated is selected from the class consisting of precast concrete products and fiber-reinforced concrete panels.

10. A process as claimed in any one of the preceding claims, wherein a first coating in the form of an aqueous coating composition which comprises at least one conventional emulsion polymer P2 and, if desired, a radiation-curable polymer P1, is applied to the mineral molding and dried, and then a radiation-curable preparation as defined in any one of claims 1 to 8 is applied to the coating thus obtained, dried, where appropriate, and then cured with UV radiation or electron beams.

11. A coated mineral molding obtainable by a process as claimed in any one of claims 1 to 10.

## Revendications

1. Procédé de préparation de corps moulés revêtus, contenant au moins un liant minéral, **caractérisé en ce que** :
1) on applique d'abord sur la surface du corps moulé au moins un revêtement conventionnel, qui contient en tant que liant un polymère P2 que l'on peut obtenir par polymérisation en émulsion aqueuse par voie radicalaire et d'une température de transition vitreuse de moins de 50°C, qui ne présente pas de doubles liaisons éthyléniquement insaturées,
2) on applique une préparation durcissable par rayonnement, contenant au moins un polymère P1 qui présente des doubles liaisons éthyléniquement insaturées, sur la surface ainsi revêtue du corps moulé, on élimine un solvant éventuellement présent, et
3) on durcit la préparation appliquée par irradiation au moyen d'UV ou de faisceaux électroniques.

2. Procédé selon la revendication 1, **caractérisé en ce que** la teneur en doubles liaisons éthyléniquement insaturées dans le polymère P1 est de l'ordre de 0,01 à 1,0 mole/100 g de P1.

3. Procédé selon la revendication 1 ou 2, **caractérisé en ce que** les doubles liaisons éthyléniquement insaturées dans P1 sont présentes en tant que groupes de la formule générale
-P-Z-X-CR¹=CHR²
dans laquelle
X représente une liaison simple, CH₂ ou CO,
Z représente une liaison simple, O ou NH,
P représente un reste organique bivalent ou de valence plus haute, ayant de 2 à 10 atomes de carbone, ou une liaison simple,
R¹ représente de l'hydrogène ou un radical méthyle, et
R² peut représenter de l'hydrogène, un radical méthyle, ou bien, lorsque X représente CO, également un radical phényle ou CO₂Y, où Y représente de l'hydrogène ou un radical alkyle en C₁ à C₄.

4. Procédé selon l'une quelconque des revendications qui précèdent, **caractérisé en ce que** P1 est choisi parmi des silicones, des polyuréthannes, des polyesters, des polyéthers, des résines époxy, des résines mélaminiques et des copolymères à base d'esters d'acide (méth)acrylique présentant des groupes éthyléniquement insaturés.

5. Procédé selon l'une quelconque des revendications qui précèdent, dans lequel la préparation durcissable par rayonnement contient en tant que polymère P1 au moins un polyuréthanne PU1 dispersible dans l'eau.

6. Procédé selon l'une quelconque des revendications qui précèdent, **caractérisé en ce que** la préparation durcissable par rayonnement comprend au moins un polymère P1 et au moins un composé S différent de P1 et à bas poids moléculaire, d'un poids moléculaire < 800, qui présente au moins une double liaison éthyléniquement insaturée et/ou au moins un groupe époxy.

7. Procédé selon la revendication 6, **caractérisé en ce que** la préparation durcissable par rayonnement contient en tant que polymère P1 un acrylate de polyuréthanne PU2 aliphatique et, en tant que composant S à bas poids moléculaire, un polyacrylate fonctionnalisé par des groupes amino.

8. Procédé selon l'une quelconque des revendications qui précèdent, **caractérisé en ce que** la préparation durcissable par rayonnement contient au moins un acrylate de polyuréthanne aliphatique PU2 et au moins un autre polymère P1 différent de lui, et choisi parmi des acrylates de polyuréthanne, des acrylates de polyéther et des acrylates de polyesters, qui sont éventuellement modifiés par des amines.

9. Procédé selon l'une quelconque des revendications qui précèdent, dans lequel le corps moulé minéral à recouvrir est choisi parmi des blocs de béton et des plaques de fibrociment.

10. Procédé selon l'une quelconque des revendications qui précèdent, **caractérisé en ce que** l'on applique sur le corps moulé minéral le premier revêtement sous la forme d'une masse de revêtement aqueuse, qui contient au moins un polymère d'émulsion conventionnel P2 et éventuellement aussi un polymère P1 durcissable par rayonnement, on sèche, on applique ensuite sur le revêtement ainsi obtenu une préparation durcissable par rayonnement telle que définie dans l'une quelconque des revendications 1 à 8, on sèche éventuellement, et on durcit ensuite par irradiation au moyen d'UV ou de faisceaux électroniques.

11. Corps moulés minéraux revêtus, que l'on peut obtenir par un procédé selon l'une quelconque des revendications 1 à 10.
